# FASCICULE DE BREVET EUROPEEN

(11) **EP 3 334 898 B1**
(45) Date de publication et mention de la délivrance du brevet: **22.05.2019**
(21) Numéro de dépôt: 16763903.8
(22) Date de dépôt: 09.08.2016
(51) Int. Cl.: E21B 43/36, E21B 17/01

(54) **INSTALLATION SOUS-MARINE DE SÉPARATION GAZ/LIQUIDE**
UNTERWASSERANLAGE ZUR GAS-FLÜSSIGKEITSTRENNUNG
UNDERWATER FACILITY FOR GAS/LIQUID SEPARATION

(30) Priorité: 10.08.2015 FR 1557639
(43) Date de publication de la demande: 20.06.2018
(73) Titulaire: Technip France, 92400 Courbevoie (FR)
(72) Inventeur: DE SORBIER, Thibault, 78170 La Celle-Saint-Cloud (FR)
(74) Mandataire: Fédit-Loriot
(86) Numéro de dépôt international: PCT/FR2016/052059
(87) Numéro de publication internationale: WO 2017/025690

(56) Documents cités:
- WO-A1-2011/073203
- WO-A1-2014/029854
- GB-A- 104 183
- GB-A- 2 260 087

## Description

La présente invention se rapporte à une installation sous-marine de séparation gaz/liquide d'un mélange multiphasique d'hydrocarbures pouvant contenir de l'eau.

Un domaine d'application envisagé est celui de l'extraction des hydrocarbures situés dans les fonds marins.

Les gisements d'hydrocarbures contiennent à la fois des hydrocarbures et de l'eau, ces fluides lorsqu'ils sont extraits depuis les fonds marins subissent l'effet d'une chute de pression qui génère des flux d'hydrocarbures liquides et gazeux, ils contiennent le plus généralement une phase liquide aqueuse. Plus la profondeur du fond de mer est importante, plus la contre-pression hydrostatique du poids de la colonne de fluide à remonter vers l'installation de surface est importante et donc plus la mise en production des fluides de production est difficile et le potentiel de récupération des hydrocarbures du gisement limité. Plusieurs artifices tels que l'injection de gaz ou le pompage multiphasique sous-marin permettent de faciliter cette mise en production. Une autre solution est la séparation gaz/liquide sous-marine du mélange multiphasique d'hydrocarbures.

Il a été imaginé de séparer par gravité, la phase gazeuse comprenant les hydrocarbures gazeux, de la phase liquide comprenant, elle, les hydrocarbures liquides et l'eau, dans le milieu sous-marin avant la remontée en surface via une pompe de relevage. Ainsi, l'installation comporte d'une part un conduit d'alimentation sous-marin du mélange multiphasique d'hydrocarbures, pouvant contenir de l'eau, provenant du gisement d'hydrocarbures, et d'autre part, une chambre de séparation longitudinale installée sensiblement verticalement dans le fond marin. La chambre de séparation présente une extrémité inférieure et une extrémité supérieure opposée, ainsi qu'une zone intermédiaire de séparation située entre les deux extrémités opposées. De plus, la chambre de séparation comprend un conduit d'injection du mélange multiphasique d'hydrocarbures, pouvant contenir de l'eau raccordé au conduit d'alimentation, et s'étendant longitudinalement à l'intérieur de la zone intermédiaire vers l'extrémité supérieure. Le conduit d'injection présente une extrémité libre et des fentes radiales s'étendant en amont de l'extrémité libre. On pourra notamment se référer au document GB 2 260 087, lequel décrit un tel conduit. Un conduit d'injection est aussi décrit dans WO2011073203.

Ce type d'installation comporte plusieurs inconvénients.

Tout d'abord, il existe un risque de moussage très important dû au cisaillement du fluide à travers les fentes radiales. Ce cisaillement génère l'éclatement des bulles de gaz initialement contenues dans les phases liquides en bulles de gaz plus fines, ainsi que la dispersion de ces dites bulles de gaz plus fines dans les phases liquides. Or plus les bulles de gaz sont fines, plus la coalescence desdites bulles de gaz est difficile et moins lesdites bulles de gaz auront tendance à remonter vers la surface et à s'échapper des phases liquides. Le risque d'entrainement des bulles de gaz avec les phases liquides, et inversement, le risque d'entraînement de fines gouttelettes de phases liquides avec la phase gazeuse s'échappant, est alors fortement accru. L'efficacité de la séparation gaz/liquide est ainsi fortement réduite. En outre, la mesure et le contrôle du niveau réel de l'interface gaz/liquide sont perturbés par la colonne de mousse.

Egalement, il existe un risque d'inégalité de temps de séjour entre le fluide s'écoulant par les fentes radiales supérieures et celui s'écoulant par les fentes radiales inférieures. En effet, le mélange multiphasique d'hydrocarbures s'écoulant par les fentes radiales inférieures tend à être aspiré, directement vers le bas, par la pompe de relevage prioritairement par rapport au mélange multiphasique d'hydrocarbures s'écoulant par les fentes radiales supérieures. Ainsi, le mélange multiphasique d'hydrocarbures s'écoulant par les fentes radiales inférieures risque de ne séjournée qu'un temps très court dans la partie supérieure de la colonne de mélange multiphasique d'hydrocarbures formée autour du conduit d'injection, parti au niveau de laquelle s'effectue principalement la séparation gaz/liquide. Or la séparation gaz/liquide est d'autant meilleure que le temps de séjour dans ladite partie supérieure de la colonne de mélange multiphasique d'hydrocarbures formée autour du conduit d'injection est grand. En effet, plus le mélange multiphasique d'hydrocarbures se situe profond dans la colonne de mélange multiphasique d'hydrocarbures formée autour du conduit d'injection, plus la pression exercée par la partie supérieure de ladite colonne de mélange multiphasique d'hydrocarbures tend à maintenir une partie de la phase gazeuse dans un état liquide et à comprimer les bulles de gaz en fine bulles plus facilement entraînable avec les phases liquides. Dès lors, et d'autant plus que le mélange multiphasique d'hydrocarbures est visqueux, la partie supérieure de la colonne de mélange multiphasique d'hydrocarbures s'oppose à la séparation gaz/liquide.

En outre, le mélange multiphasique d'hydrocarbures peut également contenir des impuretés et notamment une certaine quantité de sable et/ou de sédiments. Ces impuretés, lorsqu'elles entrent dans la chambre verticale, sont soutirées avec le mélange multiphasique d'hydrocarbures afin d'éviter toute accumulation et donc tout bouchage.

Dès lors, il existe un phénomène d'abrasion, d'érosion des surfaces métalliques bordant les fentes radiales ; ledit phénomène augmentant avec le débit.

A la longue, ce phénomène peut entraîner la casse et le détachement de parties métalliques qui seront entraînés avec le mélange multiphasique d'hydrocarbures. Outre le bouchage des conduites pouvant être généré par les parties métalliques détachées, il existe un risque d'endommagement, voire de destruction, de la pompe de relevage.

Enfin, il existe un risque important de bouchage des fentes radiales précitées notamment avec les impuretés, mais aussi avec les paraffines, ou les hydrates, particulièrement pendant les phases d'arrêt de production.

De la sorte, la phase gazeuse du mélange multiphasique d'hydrocarbures s'échappe vers l'extrémité supérieure de la chambre de séparation, tandis que la phase liquide s'évacue vers ladite extrémité inférieure. Aussi, la phase liquide est généralement diphasique puisque c'est un mélange non miscible d'hydrocarbures et d'eau, et incluant également du sable et des sédiments en suspension. L'extrémité inférieure de la chambre de séparation est reliée, de préférence, à une conduite de récupération des deux phases liquides par l'intermédiaire d'une pompe de relevage ; la conduite de récupération s'étendant alors jusqu'à la surface. Quant à l'extrémité supérieure de la chambre de séparation, elle est reliée à une conduite d'échappement qui s'étend également jusqu'à la surface pour pouvoir récupérer la phase gazeuse du mélange.

La pompe de relevage est asservie au débit liquide du mélange multiphasique d'hydrocarbures liquides et d'eau dans le conduit d'alimentation sous-marin de manière à pouvoir optimiser la séparation des phases gazeuse et liquides dans la chambre de séparation. Notamment, on vient ajuster le niveau réel de l'interface entre la phase gazeuse et des phases liquides, ci-après dénommée interfaces gaz/liquide, par rapport au conduit d'injection du mélange à l'intérieur de la chambre de séparation en contrôlant le débit opératoire de la pompe de relevage. Toutefois, cette interface gaz/liquide est malaisée à stabiliser et en pratique, on observe qu'elle oscille dans la chambre de séparation.

Aussi, un problème qui se pose et que vise à résoudre la présente invention est de pouvoir améliorer l'efficacité de la séparation de la phase gazeuse et des phases liquides, ci-après dénommée séparation gaz/liquide, à l'intérieur de la chambre de séparation.

Dans ce but, la présente invention propose une installation sous-marine de séparation gaz/liquide d'un mélange multiphasique d'hydrocarbures, ledit mélange multiphasique d'hydrocarbures comprenant une phase gazeuse et au moins une phase liquide, ladite installation comprenant, d'une part un conduit d'alimentation sous-marin dudit mélange multiphasique d'hydrocarbures, et d'autre part, une chambre de séparation longitudinale destinée à être installée sensiblement verticalement, ladite chambre de séparation présentant, d'une part une extrémité inférieure et une extrémité supérieure opposée, et d'autre part une zone intermédiaire de séparation située entre les deux extrémités opposées, ladite chambre de séparation comprenant en outre un conduit d'injection raccordé audit conduit d'alimentation et s'étendant longitudinalement à l'intérieur de ladite zone intermédiaire, ledit conduit d'injection présentant une paroi tubulaire et une extrémité libre présentant une ouverture axiale débouchant à l'intérieur de ladite chambre de séparation, de manière à autoriser ladite au moins une phase gazeuse à s'échapper vers ladite extrémité supérieure de ladite chambre de séparation, tandis que ladite au moins une phase liquide s'évacue vers ladite extrémité inférieure. Ladite paroi tubulaire est continue de manière à être étanche vis-à-vis dudit mélange multiphasique d'hydrocarbures.

Ainsi, une caractéristique de l'invention réside dans la mise en oeuvre d'un conduit d'injection dont la paroi tubulaire est dépourvue d'orifice, de telle sorte que le mélange multiphasique d'hydrocarbures est injecté à l'intérieur de la chambre de séparation, à travers sa seule ouverture axiale. Conséquemment, on obtient à l'intérieur de la chambre de séparation, une interface gaz/liquide franche entre phase gazeuse et phases liquides, plus aisément contrôlable. Plus précisément, le contrôle de la position relative de ladite interface gaz/liquide par rapport à l'ouverture axiale du conduit d'injection, laquelle est située à son extrémité libre, et depuis laquelle est injecté le mélange multiphasique d'hydrocarbures à l'intérieur de la chambre de séparation, est important pour pouvoir optimiser la séparation gaz/liquide.

Aussi, en fonctionnement normal, l'injection du mélange multiphasique d'hydrocarbures est réalisée au-dessus de l'interface gaz/liquide, soit dans la phase gazeuse, de manière à minimiser la teneur en gaz des liquides séparés.

Autrement dit, l'interface gaz/liquide doit se situer, autant que possible, en dessous de l'extrémité libre du conduit d'injection dans une zone appelée zone de séparation secondaire. Cette dernière s'étend de l'extrémité libre du conduit d'injection à l'extrémité inférieure de la chambre de séparation. Cependant, il est envisageable, mais non obligatoire, que le régime d'écoulement dans le conduit d'injection, et éventuellement en amont dans le conduit d'alimentation sous-marin, soit perturbé et de type, par à-coups, ou « slug » en langue anglaise. Au cours d'un tel régime d'écoulement perturbé par à-coups, le conduit d'injection est alternativement rempli de poches de phases gazeuses et de bouchons de phases liquides mobiles dans le temps et dans l'espace. A l'arrivée de poches de phase gazeuse et de bouchons de phases liquides dans la chambre de séparation les bouchons de phases liquides s'accumulent dans la chambre de séparation, et notamment dans la zone de séparation secondaire et tendent à faire augmenter le niveau de l'interface gaz/liquide de séparation. La zone de séparation secondaire joue alors le rôle de zone tampon. De manière exceptionnelle, le niveau de l'interface gaz/liquide pourrait augmenter jusqu'à se retrouver de manière temporaire au-dessus de l'extrémité libre du conduit d'injection. Avec un tel régime d'écoulement perturbé, la qualité de la séparation gaz/liquide est sensiblement dégradée.

Ainsi, si en fonctionnement nominal, c'est-à-dire pour un régime d'écoulement continu, autrement dit sans à-coups, le niveau de l'interface gaz/liquide se trouve suffisamment au-dessous de l'extrémité libre du conduit d'injection, le volume tampon de l'espace annulaire contenu entre l'interface gaz/liquide nominale et l'extrémité libre du conduit d'injection peut être suffisant pour absorber, en jouant le rôle de zone tampon, la plupart des accumulations générés par les bouchons de phases liquides tout en maintenant l'efficacité de la séparation gaz/liquide. Ce volume tampon est dimensionné en fonction des données de champs (pression, température, viscosité, etc.) et des dimensions du conduit d'alimentation, ou «flowlines» en langue anglaise. En pratique pour un conduit d'alimentation comportant un diamètre intérieur compris entre 5 pouces, soit environ 0,130 m et 16 pouces, soit environ 0,400 m, un volume tampon de 9 m³ semble suffisant dans la plupart des cas. Ce volume tampon pourra néanmoins varier de 5 à 25 m³ voire plus.

En outre, dans les cas où les phases liquides s'accumuleraient dans la chambre de séparation jusqu'à recouvrir l'extrémité libre du conduit d'injection, l'absence de fente radiale sur le lit conduit d'injection concentrant l'ensemble du débit du mélange multiphasique d'hydrocarbures sur l'ouverture axiale de l'extrémité libre dudit conduit d'injection, d'une part, et éventuellement une réduction du diamètre intérieur dudit conduit d'injection en direction de l'extrémité libre, aussi dénommé étranglement, et permettant d'accélérer ledit mélange multiphasique d'hydrocarbures, d'autre part, contribuent à injecter ledit mélange multiphasique d'hydrocarbures à haute vitesse dans la chambre de séparation, de sorte à créer un jet de mélange multiphasique d'hydrocarbures au niveau de l'ouverture axiale de l'extrémité libre dudit conduit d'injection, ledit jet transperçant les phases liquides accumulées dans ladite chambre de séparation, au-dessus de ladite extrémité libre dudit conduit d'injection.

Egalement, en accélérant le mélange multiphasique d'hydrocarbures, notamment avec un étranglement tel que décrit précédemment, le régime d'écoulement du mélange multiphasique d'hydrocarbures à l'intérieur du conduit d'injection tend à devenir annulaire. Dans un tel écoulement annulaire, la ou les phases liquides sont plaquées contre la paroi interne du conduit d'injection, tandis que la phase gazeuse moins dense va être expulsée de la ou des phases liquides pour se retrouver dans une zone centrale dudit conduit d'injection favorisant ainsi, la séparation gaz/liquide à l'intérieur dudit conduit d'injection. Lorsque que le mélange multiphasique d'hydrocarbure est projeté par l'ouverture axiale de l'extrémité libre du conduit d'injection, la ou les phases liquides initialement plaquées contre la paroi interne dudit conduit d'injection seront projetées radialement contre la parois internes de la chambre de séparation, générant un espace centrale par lequel la phase gazeuse pourra s'évacuer librement en direction de l'extrémité supérieur de la conduite d'injection, favorisant ainsi la séparation gaz/liquide à l'intérieur de ladite chambre de séparation.

Ainsi la dégradation des performances est minimisée et les dimensions de la chambre de séparation peuvent être maintenues compactes.

Le fait que le conduit d'injection ne soit pas perforé implique aussi une diminution du cisaillement lors de la séparation gaz/liquide et donc une minimisation du risque de moussage. Le moussage a en effet un impact négatif sur la séparation gaz/liquide, et rend également plus malaisée la régulation et le contrôle de la position de l'interface gaz/liquide.

En outre, le défaut d'ouvertures radiales dans la paroi tubulaire du conduit d'injection, limite l'agitation du mélange multiphasique d'hydrocarbures premièrement séparés et permet d'améliorer la qualité de la phase gazeuse récupérée.

Selon une autre caractéristique avantageuse de l'invention, l'installation sous-marine comprend une conduite d'échappement de ladite au moins une phase gazeuse s'étendant dans le prolongement de ladite extrémité supérieure. En pratique, la conduite d'échappement peut être installée selon plusieurs configurations : Une configuration rigide montante en chaînette, dite SCR, acronyme de « Steel Catenary Riser » en langue anglaise ; une configuration hybride montante en chaînette dite HCR, acronyme de « Hybrid Catenary Riser » en langue anglaise ; une configuration hybride montante tendue dite FSHR, acronyme de « Free Standing Hybrid Riser » en langue anglaise ; une configuration flexible montante tendue dite FSFR, acronyme de « Free Standing Flexible Riser » en langue anglaise, une configuration combinant deux ou plus des configurations précitées, ou toute autre configuration convenant à l'homme du métier.

Préférentiellement, la conduite d'échappement s'étend verticalement dans le prolongement de la chambre de séparation directement jusqu'à la surface pour pouvoir récupérer la phase gazeuse au niveau d'une installation de surface. De la sorte, les condensats et les fines gouttelettes de phases liquides entraînées qui peuvent venir se déposer sur les parois internes de la chambre de séparation ou bien de la conduite d'échappement, retombent par gravité et sont évacués avec les phases liquides. La qualité de la phase gazeuse produite est donc améliorée. Au contraire, dans une configuration hybride montante tendue dite FSHR, une conduite flexible relie l'extrémité supérieure de la conduite d'échappement à l'installation de surface, ou «topside» en langue anglaise. Cette conduite flexible, sous l'effet de son propre poids, prend généralement une posture en forme de cloche inversée qui génère un point bas avant la surface au niveau duquel risque de s'accumuler l'eau qui aurait condensé et qui risquerait d'initier la formation d'hydrate solide.

Selon encore une autre caractéristique avantageuse de l'invention, l'installation sous-marine comprend une conduite de récupération de ladite au moins une phase liquide s'étendant dans le prolongement de l'extrémité inférieure de la chambre de séparation. Tout comme la conduite d'échappement, la conduite de récupération se prolonge vers la surface jusqu'à l'installation de surface de manière à pouvoir récupérer le mélange de phases liquides.

Aussi, au moins deux possibilités sont offertes pour mettre en oeuvre l'installation sous-marine. Il est possible d'installer, d'une part d'un seul tenant l'ensemble formé par le conduit d'alimentation sous-marin, la chambre de séparation et la conduite d'échappement et d'autre part, la conduite de récupération pour pouvoir la relier audit ensemble. Il est également possible, selon une autre variante, d'installer, d'une part l'ensemble formé par le conduit d'alimentation sous-marin et la conduite de récupération, et d'autre part l'ensemble formé par la chambre de séparation et la conduite d'échappement, pour pouvoir ensuite relier les deux ensembles. De telles possibilités permettent de diminuer substantiellement les coûts et la durée de l'installation.

Selon un mode de réalisation de l'invention particulièrement avantageux, dans lequel on s'affranchit d'une structure support au niveau du sol et par la même, du travail de préparation du sol pour recevoir ladite structure support ainsi que de la campagne d'installation de ladite structure support, la chambre de séparation est suspendue dans un milieu marin. Elle est préférentiellement suspendue avec le reste de la conduite d'échappement et éventuellement la conduite de récupération à laquelle ladite chambre de séparation est raccordée. En pratique, la chambre de séparation est suspendue par suspension de la conduite d'échappement à l'installation de surface ou par l'intermédiaire d'une ou plusieurs bouées.

De façon particulièrement avantageuse, l'installation sous-marine comprend en outre au moins une pompe de relevage de ladite au moins une phase liquide, ladite au moins une pompe de relevage étant raccordée à l'extrémité inférieure de la chambre de séparation. De la sorte, ladite au moins une phase liquide du mélange multiphasique d'hydrocarbures séparé est aspirée par ladite au moins une pompe de relevage de manière à pouvoir entraîner ladite au moins une phase liquide jusqu'à l'installation de surface. Ladite au moins une phase liquide est entraînée via la conduite de récupération, sans que ladite au moins une phase liquide s'accumule au niveau de l'ouverture axiale de l'extrémité libre du conduit d'injection. Dans le cas contraire, en s'accumulant au niveau de l'ouverture axiale, ladite au moins une phase liquide risquerait de diminuer le débit du mélange multiphasique d'hydrocarbures projetée par ladite ouverture axiale et donc par la même, risquerait de diminuer le débit du mélange multiphasique d'hydrocarbures s'écoulant dans le conduit d'alimentation sous-marin. Au surplus, la ou les pompes de relevage permet de mieux réguler la position verticale de l'interface gaz/liquide dans la chambre de séparation. Dans un mode préféré de réalisation de l'invention, la pompe de relevage est une pompe verticale agencée dans le prolongement de la partie inférieure de la conduite de récupération.

Préférentiellement, le conduit d'injection et la zone intermédiaire sont sensiblement coaxiaux. De la sorte, grâce à une géométrie régulière et symétrique, les vitesses de transfert de matière à l'intérieur de la chambre de séparation sont relativement homogènes, ce qui permet une meilleure distribution de la ou des phases liquides et une meilleure stabilisation de l'interface gaz/liquide. En outre, la surface de la section de ladite extrémité inférieure de ladite chambre de séparation est inférieure à la différence des surfaces des sections de ladite zone intermédiaire et dudit conduit d'injection. De la sorte, le mélange multiphasique qui a subi une première séparation gaz/liquide à la sortie du conduit d'injection, s'écoule moins vite dans l'espace annulaire, que dans l'extrémité inférieure de la chambre de séparation, et par la suite dans la conduite de récupération, de manière à augmenter le temps de séjour du fluide dans ledit espace annulaire et favoriser ainsi une seconde séparation gaz/liquide au niveau de cet espace annulaire. On entend par espace annulaire, l'espace s'étendant entre la paroi externe du conduit d'injection et la paroi interne de la chambre de séparation.

Selon un mode de réalisation de l'invention particulièrement avantageux, le rapport des diamètres desdites sections de ladite zone intermédiaire et dudit conduit d'injection est compris entre 1,5 et 20. Avantageusement, ce rapport est de 10. Aussi, la chambre de séparation peut être ménagée dans la conduite d'échappement qui s'apparente à une conduite montante sous-marine classique, présentant un diamètre de 500 mm, soit environ 20 pouces, par exemple, tandis que le conduit d'injection située à l'intérieur, peut lui, présenter un diamètre de 200 mm, soit environ 8 pouces. De la sorte, il est aisé de dévider la conduite d'échappement, définissant la chambre de séparation, depuis un bateau de pose conventionnel, et notamment à travers le puits central présent sur certains des bateaux de pose conventionnels. En outre, et de manière plus générale, les dimensions compactes de la chambre de séparation, et globalement de la conduite d'échappement, permettent de faire passer ladite conduite d'échappement au travers des tensionneurs et des clamps d'un bateau de pose conventionnels utilisé traditionnellement pour l'installation de conduite rigide ou flexible est de type conduit d'alimentation sous-marin, « flowline » en langue anglaise où conduite montante sous-marine, « riser » en langue anglaise. On diminue de la sorte les coûts de mise en oeuvre de l'installation sous-marine selon l'invention.

On observera que la conduite d'échappement peut être une conduite flexible, ou bien une conduite rigide en acier installée en caténaire, ou encore un assemblage de conduites rigides et flexibles dans une configuration hybride HCR ou FSHR.

Selon un autre mode de réalisation de l'invention, avantageux, ladite chambre de séparation comprend des organes de déviation dudit mélange multiphasique d'hydrocarbures pour favoriser la séparation gaz/liquide. Les organes de déviation sont préférentiellement agencés sur le chemin du flux d'écoulement du mélange des phases gazeuse et liquides de manière à favoriser la séparation gaz/liquide. Selon une variante de réalisation, lesdits organes de déviation sont montés mobiles en rotation. Ainsi, les organes de déviation sont par exemple formés d'hélices qui permettent d'accélérer localement l'écoulement du mélange des phases gazeuse et liquides et favoriser la séparation gaz/liquide par effet centrifuge. Selon une autre variante de réalisation de l'invention, les organes de déviation sont montés en position fixe à l'intérieur de la chambre de séparation. Les organes de déviation sont configurés pour résister à l'érosion générée par les particules solides, du type sable et impuretés, contenues dans le mélange multiphasique d'hydrocarbures tout en conservant leur efficacité durant toute la période d'exploitation.

En outre, selon un mode de réalisation particulièrement avantageux, lesdits organes de déviation comprennent une lame agencée en hélice autour dudit conduit d'injection. On expliquera en détail dans la suite de la description des avantages d'une telle lame.

De plus, selon encore un autre mode de réalisation de l'invention préférée, ladite chambre de séparation présente une longueur de chambre et un diamètre de chambre, et ladite longueur de chambre est supérieure à cinquante fois ledit diamètre de chambre. Le rapport de longueur de chambre sur son diamètre est déterminé principalement par le temps de résidence, ou temps de séjour, du mélange multiphasique d'hydrocarbures à l'intérieur de la chambre de séparation que l'on souhaite obtenir. Ce temps de séjour est fonction du débit du mélange multiphasique d'hydrocarbures qui entre dans la chambre de séparation et du volume de celle-ci.

Selon encore un autre mode préféré de réalisation de l'invention, la conduite d'échappement et la conduite de récupération se rejoignent au sein d'une conduite à double parois, la conduite de récupération s'étendant annulairement autour de la conduite d'échappement ou inversement.

Selon encore un autre mode préféré de réalisation de l'invention, la conduite d'échappement et la conduite de récupération se rejoignent au sein d'un premier ombilical à plusieurs lignes fluides, ladite conduite d'échappement étant reliée à un premier jeu d'une ou plusieurs lignes fluides dudit premier ombilical et ladite conduite de récupération étant reliée à un deuxième jeu d'une ou plusieurs lignes fluides dudit premier ombilical distinctes des lignes fluides dudit premier jeu.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique illustrant l'installation sous-marine conforme à l'invention selon une première variante de réalisation ;
- la Figure 2 est une vue schématique illustrant l'installation sous-marine conforme à l'invention selon une deuxième variante de réalisation ;
- la Figure 3 est une vue schématique illustrant l'installation sous-marine conforme à l'invention selon une troisième variante de réalisation ;
- la Figure 4 est une vue schématique d'un détail D1 repéré sur la Figure 1 illustrant un élément de l'installation sous-marine selon la première variante de réalisation;
- la Figure 5 est une vue schématique en coupe droite selon le plan A-A d'un élément de détail illustré sur la Figure 4 ;
- la Figure 6 est une vue schématique en coupe droite selon le plan B-B d'un autre élément de détail illustré sur la Figure 4 ;
- la Figure 7 est une vue schématique en coupe axiale d'un autre détail D2 repéré sur la Figure 1 illustrant un élément de l'installation sous-marine selon la première variante de réalisation ;
- la Figure 8 est une vue schématique en coupe droite selon le plan C-C d'un détail illustré sur la Figure 7 ;
- la Figure 9 est une vue schématique en coupe droite selon le plan D-D d'un autre détail illustré sur la Figure 7 ;
- la Figure 10 est une vue schématique d'un détail D3 repéré sur la Figure 2 illustrant un élément de l'installation sous-marine selon la deuxième variante de réalisation ;
- la Figure 11 est une vue schématique en coupe droite selon le plan E-E d'un détail illustré sur la Figure 10 ;
- la Figure 12 est une vue schématique d'un détail D4 repéré sur la Figure 3 illustrant un élément de l'installation sous-marine selon la troisième variante de réalisation ;
- la Figure 13 est une vue schématique d'un autre détail D5 repéré sur la Figure 3, et selon un premier mode de mise en oeuvre ;
- la Figure 14 est une vue schématique en coupe droite selon le plan F-F d'un détail représenté sur la Figure 13 ;
- la Figure 15 est une vue schématique dudit autre détail D5 repéré sur la Figure 3, et selon un second mode de mise en oeuvre ;
- la Figure 16 est une vue schématique en perspective de détail d'un élément illustré sur la Figure 15 ;
- la Figure 17 est une vue schématique d'encore un autre détail D6 repéré sur la Figure 3 ;
- la Figure 18 est une vue schématique en perspective de détail d'un élément illustré sur la Figure 17 ;
- la Figure 19 est une vue schématique illustrant l'installation sous-marine conforme à l'invention selon une troisième variante de réalisation ; et,
- la Figure 20 est une vue schématique d'encore un autre détail D7 repéré sur la Figure 19 ; et,

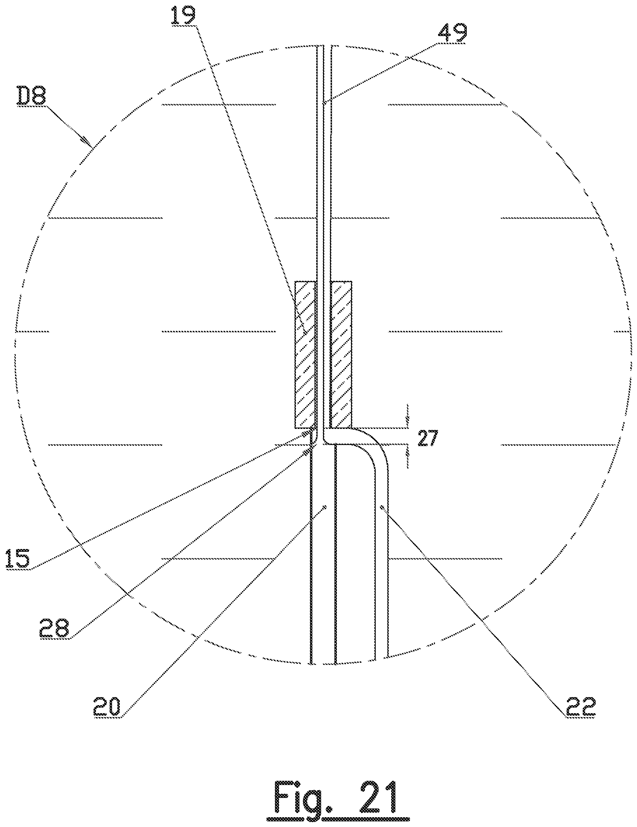

- la Figure 21 est une vue schématique d'encore un autre détail D8 repéré sur la Figure 19.

Des références identiques seront utilisées d'une Figure à l'autre pour désigner des éléments identiques ou similaires

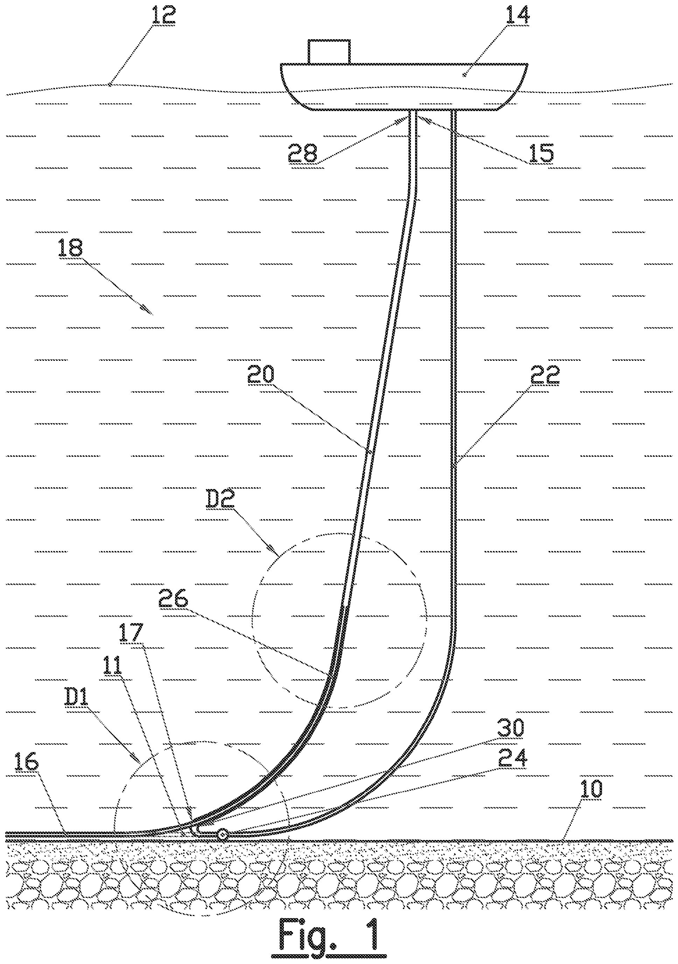

Les Figures 1 à 3 et 19 illustrent un milieu marin s'étendant verticalement depuis un fond marin 10 jusqu'à une surface marine 12. A la surface marine 12 flotte une installation de surface 14, tandis que vient s'étendre sensiblement à l'aplomb, sur le fond marin 10, un conduit d'alimentation sous-marin 16 relié en amont à un gisement d'hydrocarbures, non représenté, situé dans le sous-sol du fond marin 10. Le gisement d'hydrocarbures peut être un gisement de pétrole ou un gisement de gaz naturel, ou encore un mélange des deux. L'installation de surface 14 peut notamment être du type FPSO, acronyme de « Floating Production Storage and Offloading » en anglais, soit une unité flottante de production, de stockage et de déchargement, FLNG acronyme de « Floating Liquefied Natural Gas » en anglais, soit une unité flottante dédié au gaz naturel liquéfié, SPAR acronyme de « Single Point Anchor Réservoir » en anglais, soit une plateforme réservoir à point d'ancrage unique, Semi-Submersibles, etc. Bien évidemment, dans certaines circonstances, les puits ménagés dans les gisements d'hydrocarbures peuvent être éloignés de l'aplomb de l'installation de surface 14, et partant, le conduit d'alimentation sous-marin 16 également, ou à tout le moins, le conduit d'alimentation sous-marin 16 peut comporter une extrémité rapprochée de l'aplomb de l'installation de surface 14 à partir de laquelle ledit conduit d'alimentation sous-marin s'étend de manière à s'éloigner de l'aplomb jusqu'à rejoindre le gisement d'hydrocarbures.

Le gisement d'hydrocarbures contient un mélange multiphasique d'hydrocarbures comprenant une phase gazeuse et au moins une phase liquide carbonée.

Généralement, le mélange multiphasique d'hydrocarbures comprend en outre une phase liquide aqueuse. On observera que l'installation de surface 14 peut également être une plateforme fixe reliée au fond marin, ou bien encore une plate-forme située à terre, les puits se situant en mer à proximité des côtes.

Ainsi, un mélange de phase gazeuse et de phases liquides, ci-après dénommé mélange multiphasique d'hydrocarbures, circule à l'intérieur du conduit d'alimentation sous-marin 16.

En outre, les Figures 1 à 3 et 19 illustrent une installation sous-marine 18 de séparation gaz/liquide, destinée précisément à venir séparer la phase gazeuse de la ou des phases liquides. L'installation sous-marine 18 présente une conduite d'échappement 20 à laquelle sont reliés le conduit d'alimentation sous-marin 16 et une conduite de récupération 22. La conduite de récupération 22 est reliée en U dans le fond marin 10 à la conduite d'échappement 20 par l'intermédiaire d'une ou plusieurs pompes de relevage 24. Dans des variantes de réalisation non représentées, l'installation sous-marine 18 de séparation gaz/liquide peut comporter plusieurs conduites de récupération 22.

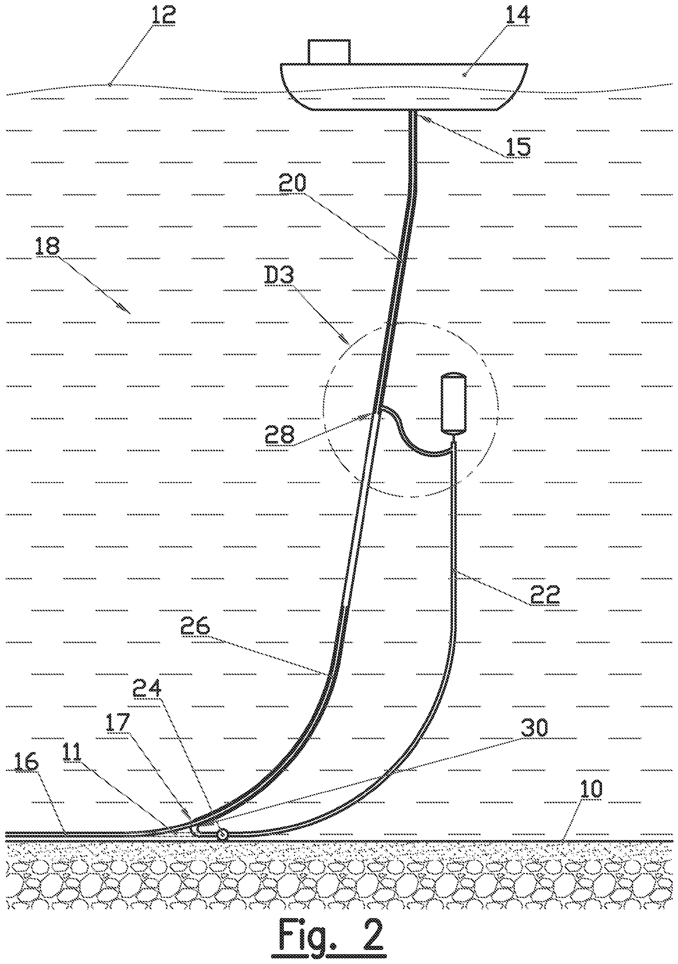

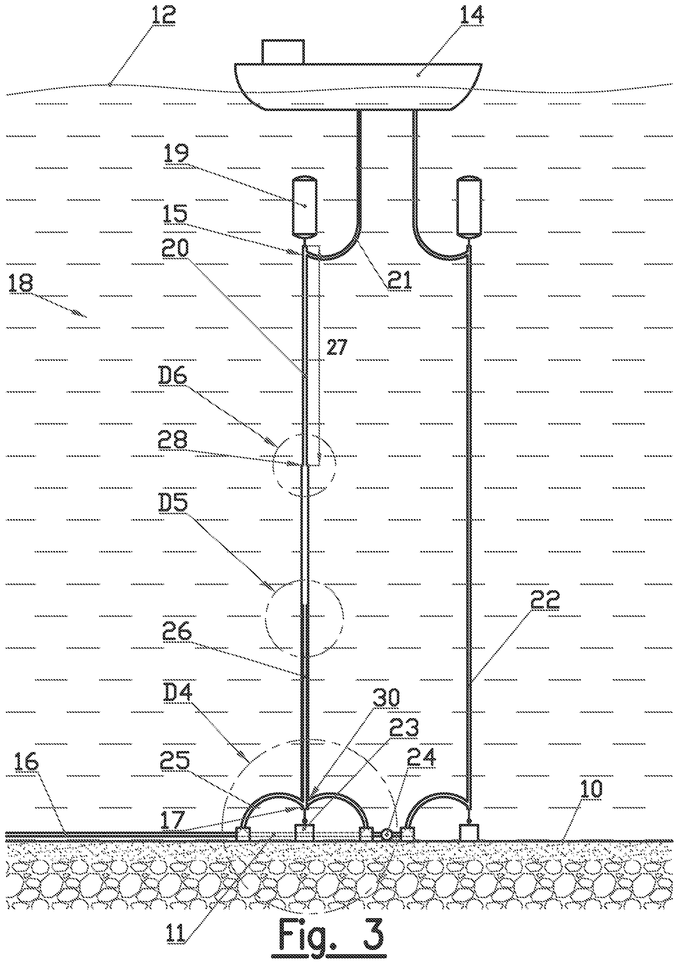

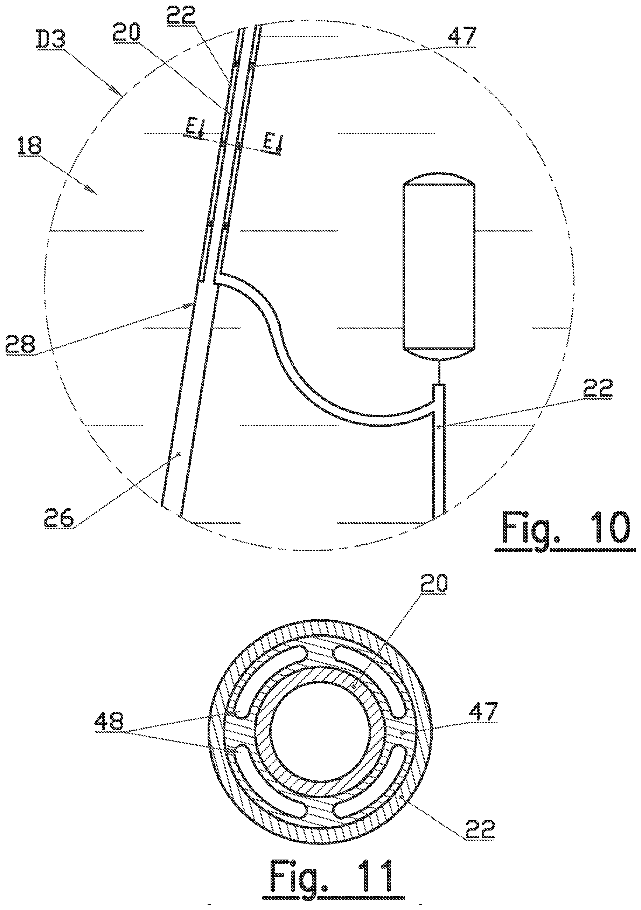

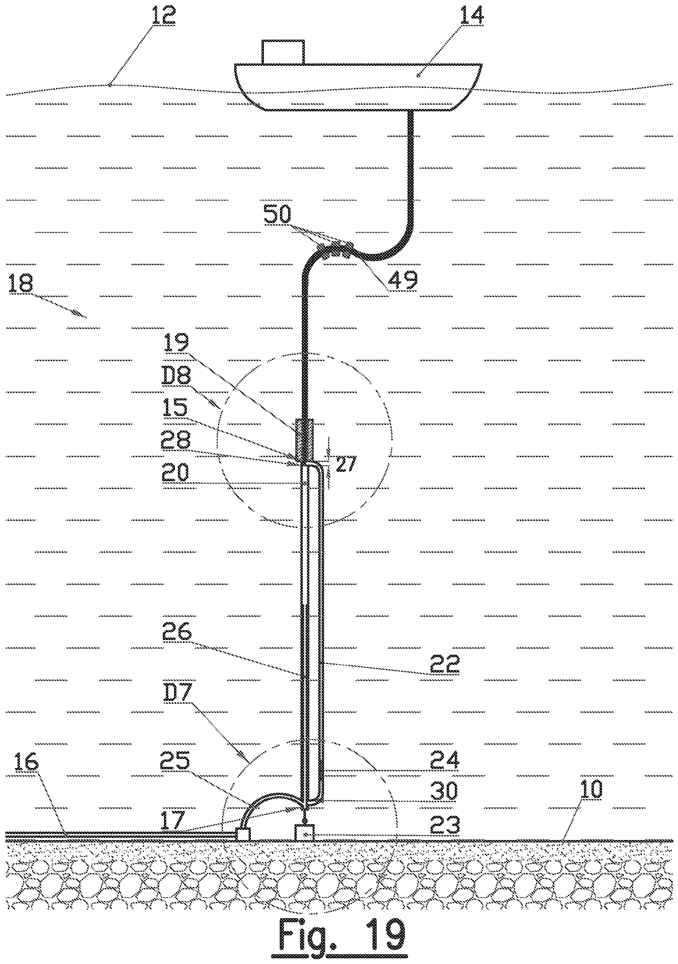

Selon les variantes de réalisation illustrées sur les Figures 1 et 3, la conduite d'échappement 20 et la conduite de récupération 22 rejoignent sensiblement parallèlement l'installation de surface 14, tandis que les variantes de réalisation illustrées sur les Figures 2 et 19 montrent la conduite d'échappement 20 et la conduite de récupération 22 qui se rejoignent au sein d'une conduite à double parois, laquelle rejoint l'installation de surface 14. La Figure 10 illustre plus en détail la conduite d'échappement 20 et la conduite de récupération 22 qui vient s'étendre annulairement autour de la conduite d'échappement 20, mais dans d'autres variantes de réalisation, la conduite d'échappement 20 pourrait venir s'étendre annulairement autour de la conduite de récupération 22. Elles constituent ainsi une conduite à double parois, dite « pipe in pipe » en langue anglaise, et qui rejoint directement l'installation de surface. Selon encore une autre variante de réalisation représentée sur les figures 29 et 31, la conduite d'échappement 20 et la conduite de récupération 22 qui se rejoignent au sein d'un premier ombilical 49 à plusieurs lignes fluides, lequel rejoint l'installation de surface 14, ladite conduite d'échappement étant reliée à un premier jeu d'une ou plusieurs lignes fluides dudit premier ombilical et ladite conduite de récupération étant reliée à un deuxième jeu d'une ou plusieurs lignes fluides dudit premier ombilical distinctes des lignes fluides dudit premier jeu. Le premier ombilical 49 peut, en particulier, être du type ombilical à lignes de production intégrées dit IPB, acronyme de « Integrated Production Bundle » en langue anglaise. En particulier, l'utilisation d'un ombilical permet d'incorporer d'autres fonctions aux lignes d'échappement et de récupération comme, par exemple, une fonction de chauffage via des câble électriques chauffants, une fonction injection de produits chimiques via des lignes fluides dédiées, une fonction contrôle des équipements sous-marins via des lignes de commande électriques, optiques, fluides, ou autres. Au niveau où la conduite d'échappement 20 et la conduite de récupération 22 se rejoignent au sein d'une conduite double parois ou du premier ombilical 49 à plusieurs lignes fluides, l'installation sous-marine peut comporter un élément de jonction. Cet élément de jonction est généralement métallique et fixé aux conduites d'échappement 20 et de récupération 22 par bride, soudure ou tout autre moyen convenant à l'homme du métier. Selon encore une autre variante de réalisation, la conduite d'échappement 20 et la conduite de récupération 22 se rejoignent au sein d'une tour montante, ou « riser tower » en langue anglaise, ladite tour montante comprenant un groupe de conduites du type conduites rigides, flexibles, ombilicaux, conduites à double parois, ou une combinaison de ces conduites.

Lorsque la conduite d'échappement 20 et la conduite de récupération 22 qui se rejoignent au sein d'une conduite à double parois, et comme représentées sur la Figure 11, une ou plusieurs cales de centrage supérieures 47, ou entretoises, peuvent être agencées dans l'espace annulaire de la conduite à double parois de manière à maintenir en position la conduite d'échappement 20 au centre de la conduite de récupération 22. La ou les cales de centrage supérieures 47 comportent un ou plusieurs orifices 48 permettant la circulation de la ou des phases liquides le long de l'espace annulaire.

Ce mode de mise en oeuvre permet de simplifier l'installation. Il est également envisagé, dans une autre variante de réalisation, que la phase gazeuse emprunte l'annulaire, tandis que la phase liquide s'écoule dans la partie centrale.

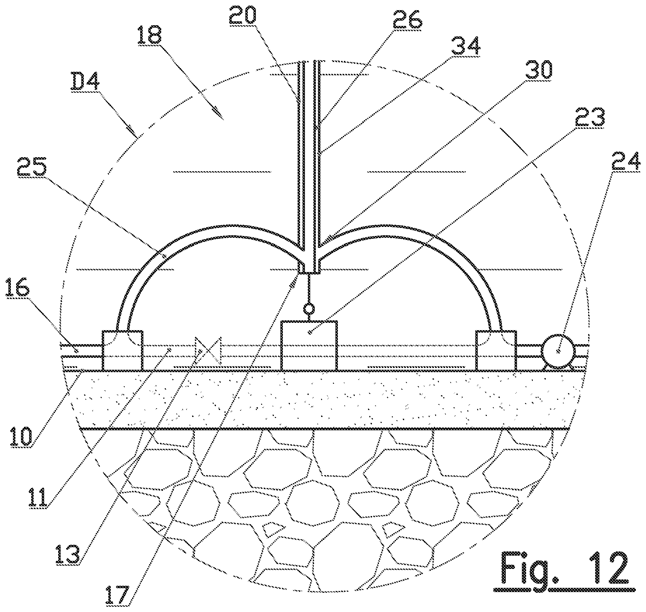

Comme représenté sur les Figures 1 à 4 et 12, l'installation sous-marine 18 est équipée d'un conduit de dérivation 11 muni d'une vanne d'arrêt 13 et qui relie le conduit d'alimentation sous-marin 16 et la conduite de récupération 22. En phase d'exploitation normale, la vanne d'arrêt 13 est en position de fermeture et s'oppose au passage du mélange de phase gazeuse et de phases liquides au travers du conduit de dérivation 11. En revanche, lors des opérations de maintenance et de raclage de la conduite de récupération 22 notamment, ou bien lorsque le mélange multiphasique d'hydrocarbures ne contient plus assez de gaz, on porte la vanne d'arrêt 13 en position d'ouverture de manière à permettre le passage des dispositifs de maintenance et/ou de raclage, et/ou le passage du mélange multiphasique d'hydrocarbure au travers du conduit de dérivation 11 de manière à dériver ledit mélange multiphasique d'hydrocarbures directement dans la conduite de récupération 22, sans séparation gaz/liquide préalable. De surcroît, une autre vanne non représentée peut être installée au niveau de la jonction entre le conduit d'alimentation sous-marin 16 et le conduit d'injection 34 afin d'éviter les remontées de liquide, ou du dispositif de raclage, ou «PIG » acronyme de « Pipeline Intervention Gadget » en anglais, à l'intérieur lorsque la vanne d'arrêt est en position d'ouverture.

Selon un mode de réalisation particulier de l'invention, notamment lorsque les profondeurs d'eau sont importantes et que donc l'environnement de l'installation sous-marine 18 est froid, les conduites d'échappement 20 et de récupération 22 présentent un revêtement externe d'isolation de manière à éviter les transferts thermiques de l'intérieur vers l'extérieur desdites conduites d'échappement 20 et de récupération 22 et donc à limiter la diminution de température de la phase gazeuse et des phases liquides circulant dans lesdites conduites d'échappement et de récupération. Le cas échéant, des câbles chauffants peuvent être enroulés autour des conduites d'échappement 20 et de récupération 22 de manière à chauffer lesdites conduites d'échappement 20 et de récupération 22 et donc à prévenir le refroidissement de la phase gazeuse et des phases liquides circulant dans lesdites conduites d'échappement et de récupération. L'objectif est ici de prévenir la formation d'hydrate, de paraffine, de glace, ainsi que de prévenir l'augmentation de la viscosité des phases liquides. Au surplus, des câbles électriques et/ou optiques peuvent être installés le long des conduites afin de pouvoir réaliser le contrôle de la température à l'intérieur des conduites d'échappement 20 et de récupération 22, et/ou le contrôle d'autres paramètres, et/ou la commande des câbles chauffants ou d'autres moyens actifs de l'installation sous-marine 18. Le contrôle de paramètres peut être réalisé au moyen d'instruments ou de capteurs connectés et installés dans, sur et autour de l'installation sous-marine 18.

On retrouve sur les Figures 1 à 3 et 19, le conduit d'alimentation sous-marin 16, la conduite d'échappement 20 et la conduite de récupération 22.

La conduite d'échappement 20 est généralement réalisée en métal, par exemple réalisée en acier. La longueur de la conduite d'échappement 20 est essentiellement limitée par la profondeur du fond marin 10. En pratique, la conduite d'échappement 20 présente une longueur supérieure à 500 m et pouvant aller à 5000 m, ou plus. L'extrémité supérieure 15 de la conduite d'échappement 20 peut s'étendre ou non au-dessus de la surface marine 12. En particulier, l'extrémité supérieure 15 de la conduite d'échappement 20 peut s'étendre de 1 m à 200 m au-delà de la surface marine 12 de manière à être connectée à l'installation de surface 14. La conduite d'échappement 20 peut être installée selon plusieurs configurations :
- une configuration rigide montante en chaînette dite SCR pour Steel Catenary Riser en anglais représenté sur les Figures 1 et 2,
- une configuration hybride montante en chaînette dite HCR pour Hybrid Catenary Riser en anglais, non représentée,
- une configuration hybride montante tendue dite FSHR pour Free Standing Hybrid Riser, représenté sur la Figure 3 et 19,
- une configuration flexible montante tendue dite FSFR, pour Free Standing Flexible Riser en langue anglaise, non représentée,
- une configuration combinant deux ou plus des configurations précitées, ou toute autre configuration convenant à l'homme du métier.

On observera que la conduite de récupération 22 peut également être installée selon les configurations précitées. Aussi, la conduite d'échappement 20 peut être installée selon une configuration hybride montante tendue, tandis que la conduite de récupération 22 est installée selon une configuration hybride montante en chaînette ou bien une configuration rigide montante en chaînette.

Dans une configuration rigide montante en chaînette (SCR), représenté sur les Figures 1 et 2, la conduite d'échappement 20 est suspendue par son extrémité supérieure 15. L'extrémité inférieure 17 de la conduite d'échappement 20 peut soit reposer au niveau du fond marin 10, soit, comme cela est représenté sur les Figures 1 et 2, suspendre l'extrémité du conduit d'alimentation sous-marin 16 à laquelle ladite conduite d'échappement est reliée, la dite extrémité du conduit d'alimentation sous-marin 16 ayant une forme incurvée remontant en direction de la surface marine 12. Dans une configuration rigide montante en chaînette (SCR), la conduite d'échappement 20 est soumises à des mouvements verticaux importants induit par le mouvement de pilonnement de l'installation de surface 14 sous l'effet de la houle lorsque ladite installation de surface est flottante. Ces mouvements verticaux de la conduite d'échappement 20, qui ont en pratique une amplitude de quelques centimètres à plusieurs mètres, induisent des contraintes mécaniques sévères et complexes dans ladite conduite d'échappement, notamment au niveau de la partie incurvée et au niveau de la zone de contact entre ladite conduite d'échappement et le fond marin 10 lorsque l'extrémité inférieure 17 de ladite conduite d'échappement repose sur ledit fond marin. Ainsi, les caractéristiques mécaniques et la masse de la conduite d'échappement 20 doivent être réparties de la façon la plus homogène possible et le plus uniformément possible le long de ladite conduite d'échappement. La conduite d'échappement 20 étant suspendue à l'installation de surface 14, la masse de ladite conduite d'échappement tend à s'opposer à la flottabilité de ladite installation de surface et à la tracter vers le fond. Dès lors, une configuration rigide montante en chaînette (SCR) sera peu adaptée aux grandes profondeurs supérieures à environ 3000 m.

Dans une configuration hybride montante tendue (FSHR), telle que représentée sur les Figures 3 et 19, la conduite d'échappement 20 est suspendue par son extrémité supérieure 15 par une bouée de tension 19 et est reliée à l'installation de surface 14 via une première conduite flexible 21. Dans une variante de réalisation la conduite d'échappement 20 est reliée à l'installation de surface 14 via un premier ombilical 49 en lieu et place de la première conduite flexible 21. Le premier ombilical 49 comporte une ou plusieurs lignes fluides, en particulier, ledit premier ombilical peut être du type ombilical à lignes de production intégrées dit IPB, acronyme de « Integrated Production Bundle » en langue anglaise. La première conduite flexible 21, ou le premier ombilical 49, peut être soutenu sous l'eau par une ou plusieurs bouées de découplage 50 réparties uniformément ou non le long de ladite première conduite flexible ou dudit premier ombilical de manière à limiter la transmission des mouvements dus aux mouvements de l'eau et subis par l'installation de surface 14 vers la conduite d'échappement 20 et la conduite de récupération 22. La ou les bouées de découplage 50 peuvent être réalisées en matériau syntactique ou sous la forme d'un réservoir métallique. La ou les bouées de découplage 50 peuvent notamment permettre d'agencer la première conduite flexible 21 ou le premier ombilical 49 dans une configuration à une ou plusieurs vagues. La bouée de tension 19 peut être réalisée en matériau syntactique. Dans une variante de réalisation, la bouée de tension 19 peut se présenter sous la forme d'un réservoir métallique contenant de l'air ou un gaz, par exemple de l'azote. Ce réservoir métallique peut être partiellement ou intégralement inondable de manière à pouvoir contrôler la flottabilité de la bouée de tension 19. En particulier, le réservoir métallique peut être inondé pendant l'installation de la bouée de tension 19 de manière à faciliter sa pénétration dans l'eau et son déplacement sous l'eau. De manière générale la bouée de tension 19 est dimensionnée de manière à au moins annuler le poids de la conduite d'échappement 20 et/ou la conduite de récupération 22, voir exercer un effort de tension supplémentaire généralement inférieur à 500kN. Dans un mode particulier de réalisation, la bouée de tension 19 peut présenter un passage central agencé dans le prolongement de la conduite d'échappement 20 et par lequel s'étend la première conduite flexible 21 ou le premier ombilical 49. Dans ce mode particulier, l'effort de tension exercé par la bouée de tension 19 est dimensionné de sorte que la conduite d'échappement 20 et/ou la conduite de récupération 22 puisse s'incliner sous l'effet d'un mouvement induit par la première conduite flexible 21 ou le premier ombilical 49 sans risquer d'endommager ladite première conduite flexible ou ledit premier ombilical contre le bord supérieur de la bouée de tension 19. L'extrémité inférieure 17 de la conduite d'échappement 20 est agencée mobile en rotation sur une fondation 23 fixée sur le fond marin 10 et reliée à l'extrémité du conduit d'alimentation sous-marin 16 via une seconde conduite flexible ou rigide 25. Ainsi, la conduite d'échappement 20, initialement orientée verticalement, est mobile en rotation en son extrémité inférieure 17 et peut donc s'incliner sous l'effet du courant marin. Lorsque la conduite d'échappement 20 s'incline, la bouée de tension 19, en exerçant un effort vertical sur l'extrémité supérieure 15 de ladite conduite d'échappement, tend à ramener ladite conduite d'échappement en position verticale. Ainsi, la conduite d'échappement 20 en s'inclinant légèrement avec les variations de courant marin subit des contraintes nettement inférieures à celles qu'elle subirait si son orientation était fixe. Cette capacité d'inclinaison minimisant les contraintes permet de fournir une conduite d'échappement 20 dont le diamètre extérieur peut varier sur sa longueur, notamment au niveau de la chambre de séparation 26 qui peut comporter un diamètre supérieur à celui du reste de ladite conduite d'échappement 20. Egalement, plus le diamètre interne de la partie supérieure 27 de la conduite d'échappement 20 situé au-dessus de la chambre de séparation 26 présente un diamètre réduit, plus la phase gazeuse séparée tend à s'échapper rapidement vers l'installation de surface 14. Ainsi, moins la phase gazeuse séparée séjourne dans la conduite d'échappement 20, moins la phase gazeuse n'a le temps de se refroidir par échange thermique avec le milieu marin, et donc plus le risque de formation d'hydrate diminue. Il doit néanmoins être pris en considération que le diamètre interne de la partie supérieure 27 de la conduite d'échappement 20 ne doit pas être exagérément réduit au point qu'il génère trop de perte de charge par friction et donc une baisse naturelle de température de la phase gazeuse par effet dît de Joule-Thomson. Egalement, lorsque l'on utilise un dispositif de chauffage de la conduite d'échappement 20 :
- les dimensions réduites de ladite conduite d'échappement permettent de fournir un dispositif de chauffage comportant des éléments aux dimensions également réduites,
- le volume et la surface à chauffer réduits permettent de limiter les coûts énergétiques.

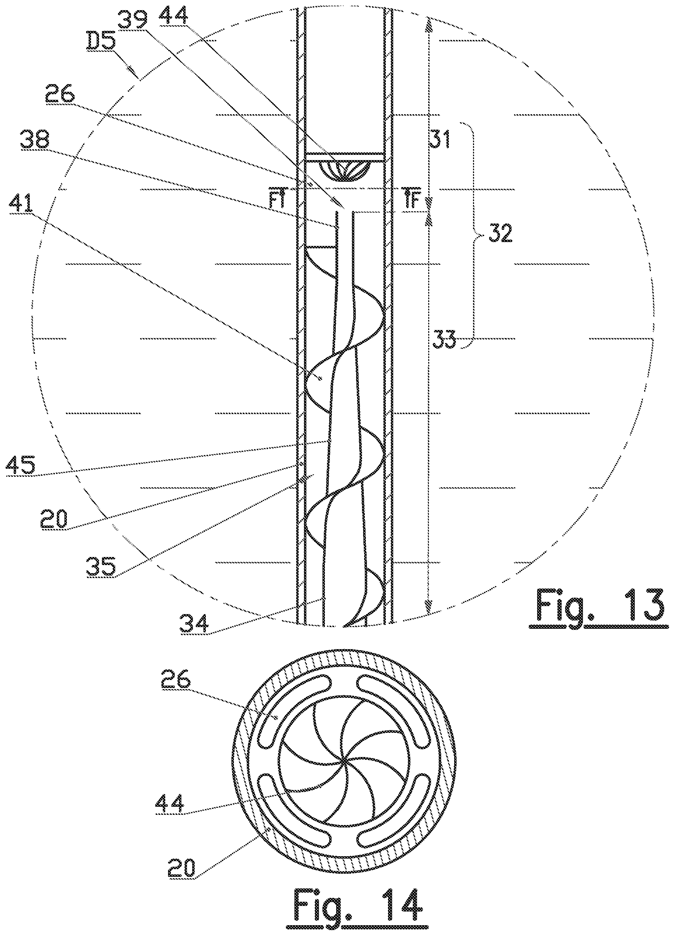

Cette configuration hybride montante tendue (FSHR) possède également l'avantage de fournir une conduite d'échappement 20 sensiblement verticale et droite contrairement à une configuration rigide montante en chaînette (SCR) dans laquelle la conduite d'échappement 20 est incurvée. Dans une telle configuration hybride montante tendue (FSHR), illustrée en détail sur la Figure 13, il est possible d'agencer un conduit d'injection 34 coaxialement de façon précise dans la chambre de séparation 26. La ou les phases liquides séparées, retombant après projection de l'ouverture axiale 39 de l'extrémité libre 38 du conduit d'injection 34, sont distribuées de façon équilibrée dans la chambre de séparation 26 et en particulier dans une zone de séparation secondaire 33 située en dessous de l'ouverture axiale 39 comme on l'expliquera plus en détail dans la suite de la description. Cette distribution équilibrée permet d'optimiser plus encore la séparation gaz/liquide. La conduite d'échappement 20 orientée sensiblement verticalement, par exemple moins de 5° d'inclinaison par rapport à la verticale, induit la régularité de l'écoulement des phases liquides, et maximise par la même l'efficacité des organes de déviation internes, que l'on décrira ci-après.

Encore un avantage de cette configuration hybride montante tendue (FSHR) est que le poids est entièrement supporté par la fondation et la bouée, et ne contraint donc pas l'installation de surface 14. Cette configuration hybride montante tendue (FSHR) est donc adaptée quelle que soit la profondeur du fond marin 10.

Dans une configuration hybride montante en chaînette (HCR), non représentée, la conduite d'échappement 20 est suspendue par son extrémité supérieure 15 via une première conduite flexible ou rigide reliée à l'installation de surface 14. L'extrémité inférieure 17 de la conduite d'échappement 20 est reliée à l'extrémité du conduit d'alimentation sous-marin 16 via une seconde conduite flexible. Cette configuration permet de fournir, comme pour une configuration hybride montante tendue (FSHR), une conduite d'échappement 20 sensiblement droite, et possède donc tous les avantages qui en découlent.

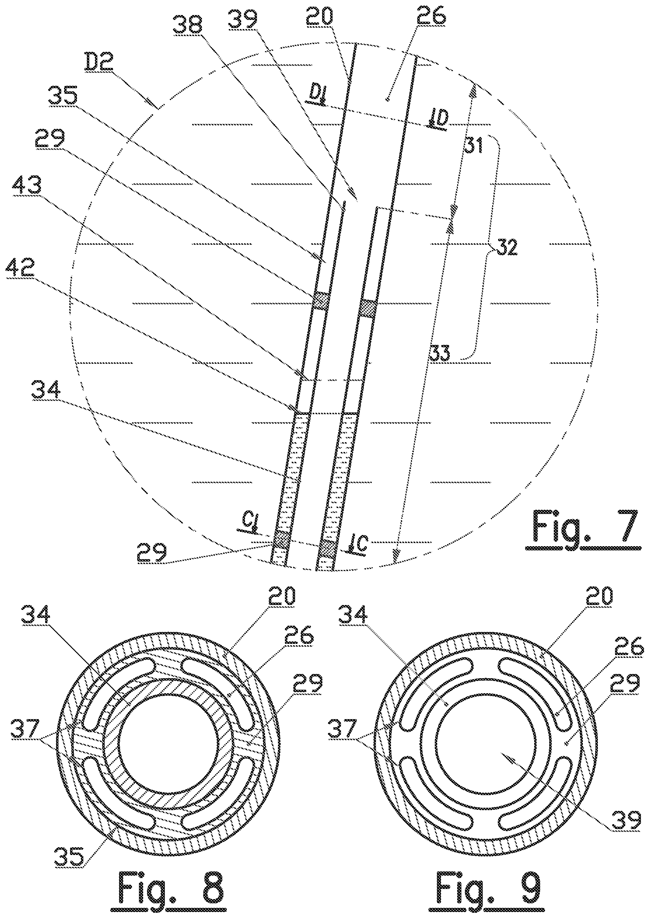

La conduite d'échappement 20, telle qu'illustrée sur la Figure 7, définit une chambre de séparation 26. La chambre de séparation 26 peut s'étendre sur une partie ou sur la totalité de la longueur de ladite conduite d'échappement 20. Dès lors que la longueur de la conduite d'échappement 20 est essentiellement limitée par la profondeur du fond marin 10, il est possible de tirer parti de cette dimension disponible pour faire s'étendre la chambre de séparation 26 sur une grande longueur. En effet, la conception de la chambre de séparation 26 est faite de manière à favoriser un ratio longueur sur diamètre particulièrement élevé, par exemple un ratio longueur sur diamètre supérieur à vingt-cinq, préférentiellement un ratio longueur sur diamètre supérieur à cinquante. En particulier la chambre de séparation 26 peut avoir une longueur d'une centaine de mètre à plusieurs centaines de mètres. De plus, le diamètre maximum de la conduite d'échappement 20, notamment au niveau de la chambre de séparation 26, est dimensionné de manière à permettre l'installation de la conduite d'échappement 20 de façon conventionnelle, c'est-à-dire que ledit diamètre est dimensionné de manière à ce que ladite conduite d'échappement puissent passer au travers des équipements de pose disponibles sur les bateaux de pose conventionnels, en particulier au travers des tours d'installation, des tensionneurs, des puits d'installation, de la même manière que passerait une conduite montante sous-marine classique (« riser » en anglais) Dans certains cas particuliers, lorsque les bateaux de pose ne permettent pas la pose de la chambre de séparation 26 en déroulé, mais qu'au contraire que la dite chambre est insérée entre deux parties de l'installation sous-marine 18 et fixée à ces deux dites parties sur le bateau de pose, ces deux dites parties pouvant être ou pas installées en déroulé, ladite chambre de séparation peut avantageusement avoir des dimensions plus réduites de manière à pouvoir être transportée couchée sur le pont du bateau de pose ou sur une barge. Dans un tel cas la chambre de séparation aura une longueur généralement inférieure à 50 m. La chambre de séparation 26 présente une extrémité supérieure 28 et à l'opposé une extrémité inférieure 30. La chambre de séparation 26 présente également une zone intermédiaire 32.

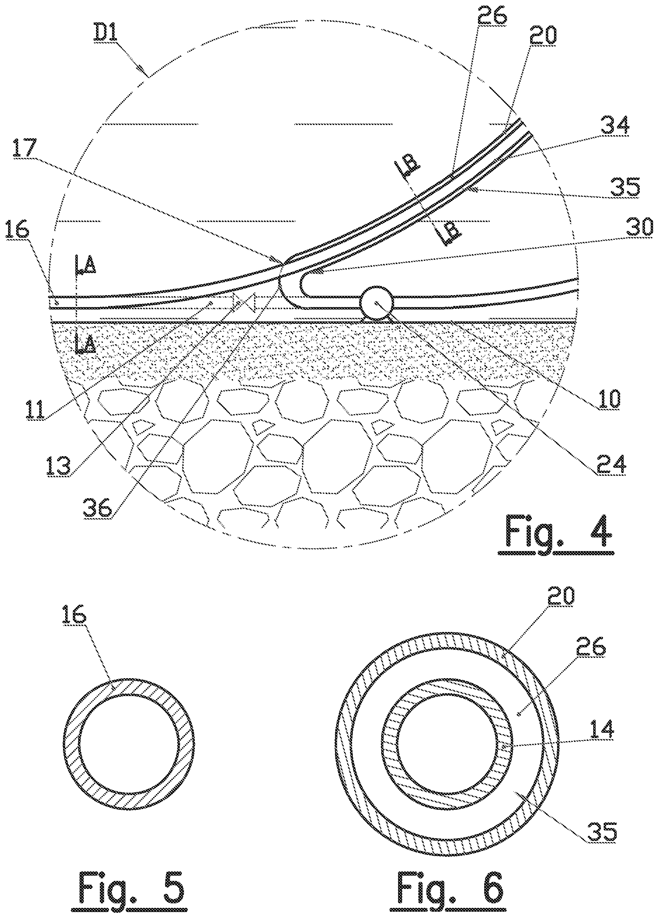

Dans une configuration rigide montante en chaînette (SCR), telle que présentée sur les Figures 1 ou 2, et lorsque la chambre de séparation 26 s'étend sur une partie seulement de la conduite d'échappement 20, ladite chambre de séparation 26 peut être localisée essentiellement dans la partie suspendue de la conduite d'échappement 20, ou encore reposer partiellement sur le fond marin 10. Selon la position de la chambre de séparation 26 dans la conduite d'échappement 20, la zone intermédiaire 32 peut présenter une forme incurvée ou droite. La chambre de séparation 26 peut présenter une extrémité inférieure 30, illustrée plus en détail sur la Figure 4, s'étendant en épingle par rapport à la zone intermédiaire 32 au niveau d'une jonction 36 au niveau de laquelle le conduit d'alimentation sous-marin 16 relie la zone intermédiaire 32 de la chambre de séparation 26 pour se prolonger à l'intérieur par le conduit d'injection 34. Selon un autre mode de mise en oeuvre de l'invention, non représenté, un raccord de conduite est substitué à l'extrémité inférieure 30, ledit raccord de conduite étant connecté au niveau de la jonction 36 au moyen d'un connecteur prévu à cet effet. Ce raccord de conduite peut être réalisé dans un élément de conduite flexible, du type comprenant une gaine étanche et des armures métalliques, ou bien être simplement le prolongement de la conduite de récupération 22.

De manière générale, quelque soit la configuration la section de conduite reliant l'extrémité inférieure 30 de la chambre de séparation 26 à la pompe de relevage 24 est, soit un raccord de conduite flexible, soit le prolongement de la conduite de d'échappement 20, soit le prolongement de la conduite de récupération 22.

A l'intérieur de la zone intermédiaire 32 s'étend, généralement sensiblement coaxialement, mais pas nécessairement, le conduit d'injection 34 présentant une paroi tubulaire, dans le prolongement du conduit d'alimentation sous-marin 16, comme représenté sur les Figures 7 à 9, 12, 13 et 15. La zone intermédiaire 32 comporte alors un espace annulaire 35 s'étendant entre la paroi externe du conduit d'injection 34 et la paroi interne de la chambre de séparation 26.

La zone intermédiaire 32 lorsqu'elle est incurvée, dans le cas d'une configuration rigide montante en chaînette (SCR), présente une courbure naturelle résultant principalement de la déformation de la conduite d'échappement 20 sous son propre poids, ladite conduite d'échappement étant suspendue par son extrémité supérieure 15 et reposant au niveau de son extrémité inférieure 17 sur le fond marin ou prenant appuis sur l'extrémité du conduit d'alimentation sous-marin 16 initiant une courbure remontant en direction de la surface marine 12.

Comme représenté sur les Figures 7 à 9, des cales de centrage 29, ou entretoises, peuvent être agencées dans la zone intermédiaire 32, et plus particulièrement dans la zone de séparation secondaire 33, autour du conduit d'injection 34 de manière à maintenir en position le conduit d'injection au centre de la chambre de séparation 26, notamment lorsque ladite zone intermédiaire est incurvé dans le cas d'une configuration rigide montante en chaînette (SCR). Les cales de centrage 29, illustrées en détail sur les Figures 8 et 9, comportent un ou plusieurs orifices 37 permettant la circulation de la ou des phases liquides le long de la zone de séparation secondaire 33.

De façon pratique, le conduit d'alimentation sous-marin 16 est raccordé à la chambre de séparation 26, tandis que le conduit d'injection 34 qui prolonge ledit conduit d'alimentation sous-marin, est un élément indépendant solidaire de la chambre de séparation 26 dans laquelle ledit conduit d'injection s'étend.

La chambre de séparation 26 s'étend essentiellement verticalement, et c'est plus précisément le cas de la partie de la zone intermédiaire 32, dans laquelle débouche le conduit d'injection 34. Ce dernier présente à une extrémité libre 38, une ouverture axiale 39 de laquelle est projeté, le mélange multiphasique d'hydrocarbures.

Ainsi, telle que représentée sur la Figure 7, la zone intermédiaire 32 de séparation peut être subdivisée entre :
- une zone de séparation primaire 31 s'étendant de l'extrémité libre 38 du conduit d'injection 34 à l'extrémité supérieure 28 de la chambre de séparation 26 ; et,
- la zone de séparation secondaire 33, citée ci-dessus, s'étendant de l'extrémité libre 38 du conduit d'injection 34 à l'extrémité inférieure 30 de la chambre de séparation 26.

Ainsi, l'ouverture axiale 39 du conduit d'injection 34 débouche à l'intérieur de la chambre de séparation 26 de manière à projeter le mélange multiphasique d'hydrocarbures dans ladite zone de séparation primaire 31, et donc à autoriser au moins une partie de la phase gazeuse à s'échapper vers l'extrémité supérieure 28 de la chambre de séparation 26, tandis que ladite au moins une phase liquide retombe par gravité sous l'effet de son propre poids en direction de l'extrémité inférieure 30 de la chambre de séparation 26, et s'évacue ainsi vers la zone de séparation secondaire 33. La première séparation gaz/liquide peut être partielle. Ainsi, à l'issue de la première séparation gaz/liquide, il est possible qu'une partie de la phase gazeuse soit restée emprisonnée dans la ou les phases liquides. Dès lors, la zone de séparation secondaire peut ne pas contenir uniquement la ou les phases liquides, mais un mélange multiphasique d'hydrocarbures résultant de la première séparation gaz/liquide, ci-après nommé mélange multiphasique d'hydrocarbures premièrement séparé. Une seconde séparation gaz/liquide est alors réalisée dans la zone de séparation secondaire, par décantation. La deuxième séparation gaz/liquide peut être partielle. Ainsi, à l'issus de la deuxième séparation gaz/liquide, il est possible qu'une partie de la phase gazeuse soit restée emprisonnée dans la ou les phases liquides. Dès lors, en sortie de la zone de séparation secondaire, le fluide peut ne pas contenir uniquement la ou les phases liquides, mais un mélange multiphasique d'hydrocarbures résultant de la deuxième séparation gaz/liquide, ci-après nommé mélange multiphasique d'hydrocarbures deuxièmement séparé.

En pratique, la distance entre l'extrémité libre 38 du conduit d'injection 34 et l'extrémité inférieure 30 de la chambre de séparation 26 est configurée de manière à permettre un temps de séjour du mélange multiphasique d'hydrocarbures suffisamment important pour que la coalescence des bulles de phase gazeuse soit optimale. Cette distance entre l'extrémité libre 38 du conduit d'injection 34 et l'extrémité inférieure 30 de la chambre de séparation 26 est préférentiellement supérieur à 10 m. De même, le diamètre intérieur de la zone de séparation secondaire 33 peut être supérieur à celui de la zone de séparation primaire 31 de manière à augmenter la surface de l'espace annulaire 35 de ladite zone de séparation secondaire et ainsi diminuer la vitesse d'écoulement de la ou des phases liquides. Inversement, dans des cas particuliers de l'extraction gazière, pour lesquels le débit de gaz est plus important que le débit liquide, le diamètre intérieur de la zone de séparation primaire 31 peut être supérieure à celui de la zone de séparation secondaire 33 de manière à augmenter la surface de la section de la zone de séparation primaire par laquelle s'échappe la phase gazeuse et ainsi diminuer la vitesse d'écoulement de la phase gazeuse et limiter les potentiels entrainement des fines gouttelettes de phases liquides avec le gaz.

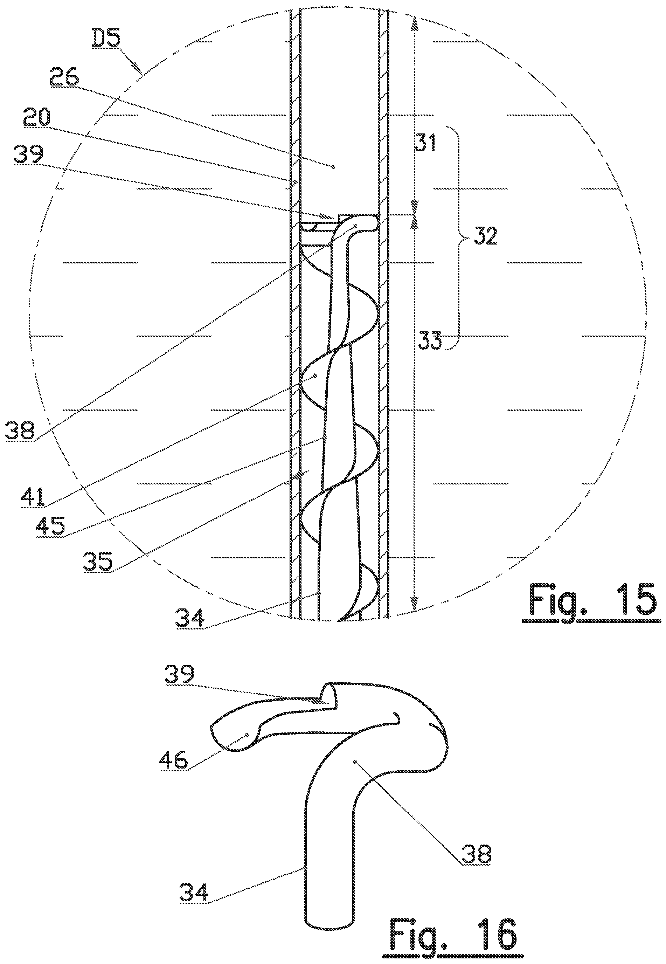

Selon des modes de mise en oeuvre illustrés sur les Figures 13 et 15, le diamètre du conduit d'injection 34, peut varier sur sa longueur. Aussi, une réduction du diamètre intérieur 45 au niveau de l'extrémité libre 38 du conduit d'injection 34, aussi appelé étranglement, peut s'opérer soit sur une courte longueur, soit sur une grande longueur. En pratique, on privilégiera les grandes longueurs, par exemple des longueurs d'étranglement mesurant plusieurs dizaines de mètre, dans des proportions d'environ 300 fois le diamètre intérieur de l'extrémité libre 38 du conduit d'injection 34 de manière à stabiliser le régime d'écoulement du mélange multiphasique d'hydrocarbures. Par exemple, pour une ouverture axiale 39 de l'extrémité libre 38 du conduit d'injection 34 ayant un diamètre de 8 pouces (environ 0,203 m), et pour un diamètre du conduit d'alimentation sous-marin 16 de 10 pouces (environ 0,254 m), une longueur d'étranglement de 60 m conviendra. La réduction du diamètre intérieur 45 peut, en particulier, être initiée dès l'origine du conduit d'injection 34.

Lorsque le conduit d'injection 34 n'est pas rectiligne, il est avantageusement courbé et peu anguleux, le rayon de courbure étant calculé de manière à minimiser les pertes de charges dans ledit conduit d'injection, et ainsi permettre de maximiser la récupération du mélange multiphasique d'hydrocarbures provenant du gisement d'hydrocarbures. Par exemple, le conduit d'injection 34 aura une forme d'hélicoïde. Le pas de l'hélicoïde peut alors être de 2 m ou plus. Le rayon de courbure, peut par exemple être de 0,3 m pour un diamètre interne de la chambre de séparation 26 de 16 pouces (environ 0,246 m) et un diamètre du conduit d'injection 34 de 6 pouces (environ 0,152 m). En outre, partant du diamètre intérieur de la chambre de séparation 26, le diamètre extérieur du conduit d'injection 34 est calculé de manière à être minimal et ainsi obtenir un volume de la zone de séparation secondaire 33 maximisant les temps de séjours du mélange multiphasique d'hydrocarbures premièrement séparé. En pratique, le diamètre minimum du conduit d'injection 34 est fixé par un critère d'érosion. Par exemple, pour un conduit d'injection 34 en acier carbone, la vitesse d'écoulement du mélange multiphasique d'hydrocarbures dans ledit conduit d'injection doit rester inférieure à 30 m/s. Le diamètre du conduit d'injection 34 sera alors calculé en fonction des données de champ et notamment en fonction du débit du gisement d'hydrocarbures. Pour un conduit d'injection 34 en acier inox, la vitesse d'écoulement du mélange multiphasique d'hydrocarbures dans ledit conduit d'injection 34 peut s'élever jusqu'à 50 m/s.

Selon un mode avantageux de réalisation, le diamètre intérieur du conduit d'injection 34, peut en outre être dimensionné afin de favoriser, à l'intérieur dudit conduit d'injection, un écoulement de type annulaire du mélange multiphasique d'hydrocarbures, et ainsi permettre, à l'extrémité libre 38 dudit conduit d'injection, de projeter radialement la ou les phases liquides, cette projection radiale permettant d'optimiser la séparation gaz/liquide. En pratique, une vitesse d'écoulement du mélange multiphasique d'hydrocarbures dans ledit conduit d'injection 34 supérieure à 10 m/s favorisera la formation d'un régime d'écoulement annulaire. Le diamètre du conduit d'injection 34 sera alors calculé en fonction des données de champ et notamment en fonction du débit du gisement d'hydrocarbures de manière à obtenir une vitesse d'écoulement du mélange multiphasique d'hydrocarbures supérieure ou égale à 10m/s.

Selon un mode avantageux de réalisation non représenté, un organe d'écoulement est agencé à l'intérieur du conduit d'injection 34 tel que représenté sur la Figure 13, et il est configuré pour générer un écoulement annulaire du mélange multiphasique d'hydrocarbures à l'intérieur dudit conduit d'injection. L'organe d'écoulement peut en particulier se présenter sous la forme d'une lame en hélicoïde, ou encore d'une série d'ailettes, fixée sur la paroi interne du conduit d'injection 34 et configurée pour induire un mouvement cyclonique au mélange multiphasique d'hydrocarbures.

L'ouverture axiale 39 est généralement formée par la troncature du conduit d'injection 34 par un plan sensiblement orthogonale à l'axe dudit conduit d'injection, ledit plan pouvant, selon certaines variantes, être incliné par rapport à l'axe dudit conduit d'injection de manière à obtenir une extrémité biseautée.

Dans certains modes de réalisation, l'ouverture axiale 39 du conduit d'injection 34 débouche axialement vers la zone de séparation primaire 31, de manière à projeter le mélange multiphasique d'hydrocarbures dans ladite zone de séparation primaire, et donc à autoriser au moins une partie de la phase gazeuse à s'échapper vers l'extrémité supérieure 28 de la chambre de séparation 26, tandis que ladite au moins une phase liquide retombe par gravité sous l'effet de son propre poids en direction de l'extrémité inférieure 30 de la chambre de séparation 26, et s'évacue ainsi vers la zone de séparation secondaire 33.

Dans un mode de réalisation représenté sur les Figures 15 et 16, l'extrémité libre 38 du conduit d'injection 34 est courbée de manière à projeter le mélange multiphasique d'hydrocarbures tangentiellement aux parois internes de la chambre de séparation 26 de manière à créer un écoulement hélicoïdal le long desdites parois. En outre, et comme représenté sur les Figures 15 et 16, l'extrémité libre, peut comporter au-delà de son ouverture axiale 39, un support de guidage 46 configuré pour guider le mélange multiphasique d'hydrocarbures dans son mouvement tangentiel aux parois internes de la chambre de séparation 26, tout en permettant la séparation gaz/liquide sur la partie supérieure du mélange multiphasique d'hydrocarbures s'écoulant sur ledit support de guidage. Le support de guidage peut en particulier prendre la forme d'un demi-tube dont la convexité est orientée vers la zone de séparation secondaire.

Dans d'autres modes de réalisation non représentés, l'extrémité libre 38 du conduit d'injection 34 se scinde en plusieurs sous-conduits courts agencés de manière à générer pour chacun desdits sous-conduit un jet le mélange multiphasique d'hydrocarbures orienté selon une direction prédéfinie favorisant la séparation gaz/liquide. Par exemple les jets peuvent être orientés de manière à ce que le mélange multiphasique d'hydrocarbures soit projeté tangentiellement aux parois internes de la chambre de séparation 26 de manière à créer un écoulement hélicoïdal le long desdites parois. Seulement un ou plusieurs des sous-conduits peuvent également être équipés d'un support de guidage 46 comme celui précédemment décrit.

Dans les modes de réalisation pour lesquels le mélange multiphasique d'hydrocarbures est projeté tangentiellement aux parois internes de la chambre de séparation 26, la forme et les dimensions du conduit d'injection 34 seront préférentiellement choisis de manière à ce que l'écoulement du mélange multiphasique d'hydrocarbures à l'intérieur dudit conduit d'injection 34 ne soit pas annulaire.

Dès lors que la longueur de la chambre de séparation 26, peut être importante, comme explicité précédemment, la longueur de la zone de séparation secondaire 33, et nécessairement la longueur du conduit d'injection 34, peut être dimensionnée de manière à aménager une zone tampon entre l'extrémité libre 38 du conduit d'injection 34 et le niveau nominal de de l'interface gaz/liquide dans la chambre de séparation 26 en fonctionnement nominal. La zone tampon est configurée pour stocker les surplus momentanés de phases liquides pendant les régimes d'écoulement par à-coup (ou « slug flow » en anglais). En tout état de cause, la longueur de la chambre de séparation 26 est préférentiellement dimensionnée de manière à ce que, dans les cas d'écoulement par à-coup les plus défavorables, les phases liquides ne puissent sortir de ladite chambre de séparation par son extrémité supérieure 28.

En fonctionnement nominal, comme illustrée sur la Figure 7, l'interface gaz/liquide 42 est positionné au niveau de la zone de séparation secondaire 33, à une distance « d » prédéterminée de l'extrémité libre 38 du conduit d'injection 34. La distance « d » prédéterminée est préférentiellement dimensionnée de manière à ce que le volume tampon de la zone tampon soit compris entre 5 m³ et 20 m³. En pratique, la distance « d » prédéterminée est au moins supérieure à 10 m, généralement supérieure à 50 m. Le contrôle du débit de la ou les pompes de relevage 24 permet de réguler la position du niveau réel de l'interface gaz/liquide 42 dans la chambre de séparation 26 pour qu'il coïncide avec le niveau nominal de l'interface gaz/liquide 43 désiré.

Un ou plusieurs capteurs, non représentés, agencés à l'intérieur ou l'extérieur de l'installation sous-marine 18, sont configurés pour mesurer en temps réel, ou à intervalle régulier, le niveau réel de l'interface gaz/liquide 42 dans la chambre de séparation 26. Ce ou ces capteurs peuvent, par exemple, être des capteurs de pression, agencés sous le niveau nominal de l'interface gaz/liquide 43 et configurés pour déterminer le niveau réel de ladite interface gaz/liquide à partir de la pression mesurée exercée par la colonne de liquides située entre ladite interface gaz/liquide et ledit capteur de pression. Une unité de commande est configuré pour :
- augmenter le débit de la ou les pompes de relevage 24 lorsque le niveau réel de l'interface gaz/liquide 42 est au-dessus du niveau nominal de l'interface gaz/liquide 43 désiré,
- diminuer le débit de la ou les pompes de relevage 24 lorsque le niveau réel de l'interface gaz/liquide 42 est au-dessous du niveau nominal de l'interface gaz/liquide 43 désiré.

Un ou plusieurs capteurs de pression sont préférentiellement situés à l'extrémité inférieure 30 de la chambre de séparation 26, et/ou en amont de la ou les pompes de relevage 24. En particulier, les capteurs de pression installés de série avec les pompes de relevage dans les schémas d'installation conventionnels peuvent en particulier être utilisés pour la mesure du niveau réel de l'interface gaz/liquide 42 en plus de leur utilisation normale de manière à éviter l'installation d'un capteur de pression supplémentaire sur l'installation sous-marine 18.

L'utilisation d'un capteur de pression possède l'avantage, par rapport à des capteurs optiques, que son fonctionnement reste inaltéré dans un environnement salissant comme celui des hydrocarbures, contrairement aux capteurs optiques qui sont sujet à l'encrassement et pour lesquels la mesure peut être perturbée en présence d'écoulements turbulents ou de mousse.

L'utilisation d'un ou plusieurs capteurs de pression secondaires, agencés dans la partie supérieure de la chambre de séparation 26, préférentiellement au niveau de l'extrémité supérieure 28, peut permettre de compléter la mesure de pression en calculant le différentielle de pression entre ce ou ces capteurs de pression secondaires et le ou les capteurs de pression agencés sous le niveau nominal de l'interface gaz/liquide 43. Plus le différentiel de pression mesuré est grand, plus le niveau réel de l'interface gaz/liquide 42 peut être déterminé précisément. Dès lors plus la hauteur de la colonne de phases liquides, se situant en amont du capteur de pression agencé sous le niveau nominal de l'interface gaz/liquide 43, est grande plus le différentiel de pression sera grand. Ainsi, la longueur de la chambre de séparation 26 est donc déterminée de manière à permettre, en fonctionnement nominal, d'avoir une hauteur de colonne de phases liquides au moins égale à 20 m.

En particulier, les capteurs de pression installés de série avec la vanne d'arrivée de la conduite d'échappement 20, et agencés au niveau de l'installation de surface 14 dans les schémas d'installation conventionnels, peuvent être utilisés pour la mesure du niveau réel de l'interface gaz/liquide 42 en plus de leur utilisation normale de manière à éviter l'installation d'un capteur de pression supplémentaire sur l'installation sous-marine 18.

En particulier, l'ajout de capteurs supplémentaires nécessite généralement pour leur fixation, de percer localement les conduites. Or ces perçages tendent à créer des points de fragilité sur les conduites qui induisent des risques sécuritaires majeurs au regard de l'exposition desdites conduites à des pressions de fonctionnement, à des mouvements de torsions et de flexion, ainsi qu'à des vibrations, très importants.

En outre, la hauteur importante de la colonne de phases liquides génère une pression importante au niveau de l'aspiration de la ou des pompes de relevage 24. Cette pression importante induit un phénomène de rétro-condensation des bulles de gaz entrainées avec les phases liquides. On entend par rétro-condensation le fait que le gaz se re-liquéfie sous l'effet de la pression élevée. Ainsi, la fraction volumique apparente de gaz mélangée à l'intérieur de la ou des phases liquides au niveau de l'aspiration de la ou les pompes de relevage 24 est réduite de manière significative. En outre, plus la fraction volumique apparente de gaz diminue plus l'efficacité de la ou les pompes de relevage 24 augmente. En effet, plus de gaz est mélangé avec la ou les phases liquides, plus le mélange est compressible, et plus l'efficacité de la ou les pompes de relevage 24 diminue.

Egalement, la colonne de phases liquides tend, sous l'effet de la gravité, à s'écouler au travers de la ou les pompes de relevage 24 et accroit de fait l'efficacité de ladite ou lesdites pompes de relevage. Ainsi, une grande gamme de pompes de relevage sous-marines conventionnelles est sélectionnable.

Aussi, lorsque de la mousse se forme au niveau de la zone de séparation secondaire 33, la distance séparant la partie supérieure de la mousse et la ou les pompes de relevage 24 est telle que si une colonne de mousse de cette taille venait à se former, la mousse se décomposerait en liquide sous son propre poids. Ainsi, il est impossible que de la mousse atteigne la ou les pompes de relevage 24 et soit aspirée par cette dernière, évitant ainsi les risques de désamorçage, d'endommagement voire de destruction de ladite ou lesdites pompes de relevage.

Dans un mode de réalisation avantageux de l'invention, un capteur de pression amont est installé en amont ou au sein du conduit d'injection 34. Ce capteur de pression amont permet de détecter un potentiel engorgement provisoire de la zone tampon. Dans un tel cas d'engorgement provisoire, le niveau réel de l'interface gaz/liquide 42 telle qu'illustrée sur la Figure 7, se situerait au-dessus de l'extrémité libre 38 du conduit d'injection 34. Un tel cas d'engorgement est indésirable et induit la dégradation des performances de la séparation gaz/liquide. Dès lors, lorsque le capteur de pression amont détecte un cas d'engorgement de la zone tampon, l'unité de commande peut :
- soit commander l'augmentation du débit de la ou les pompes de relevage 24 en conséquence,
- soit, dans certain cas où il y a un risque d'endommagement de l'installation sous-marine 18, commander l'arrêt de dispositifs situés en amont ou en aval de ladite installation sous-marine ainsi que l'arrêt de la ou les pompes de relevage 24.

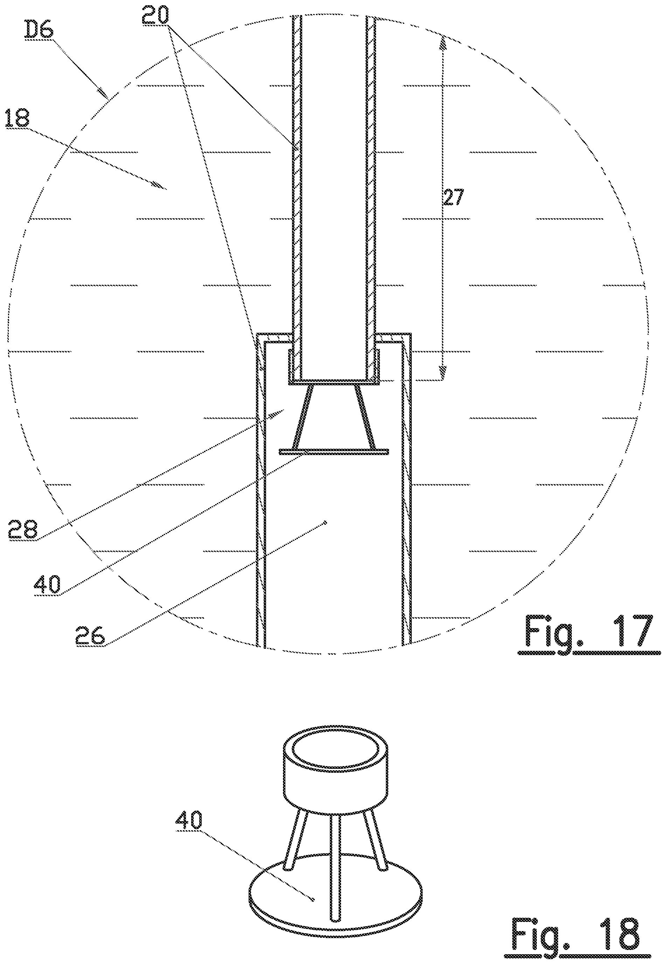

Dans le cas d'une configuration hybride montante tendue (FSHR), telle que représentée sur les Figures 3 et 19, et lorsque le diamètre de la partie supérieure 27 de la conduite d'échappement 20 est inférieure au diamètre de la chambre de séparation 26, la hauteur de la zone de séparation primaire doit être suffisante pour que la ou les phases liquides projetées par l'extrémité libre 38 du conduit injection 34 retombent avant d'atteindre la zone dans laquelle intervient le rétrécissement de diamètre. En effet, dans la zone dans laquelle intervient le rétrécissement de diamètre, la phase gazeuse séparée subit une accélération. Dans le cas où la ou les phases liquides projetées atteindraient la zone dans laquelle intervient le rétrécissement de diamètre, la phase gazeuse séparée ainsi accélérés risquerait d'emporter des fines gouttelettes de phases liquides dans la conduite d'échappement 20 jusqu'à l'installation de surface 14. La hauteur de la zone de séparation primaire est généralement supérieure à 2m, préférentiellement supérieure à 10m. Pour pallier ce risque, notamment lorsque la hauteur de la zone de séparation primaire est inférieure à 10 m, un organe de déviation supérieur 40, comme représenté sur les Figures 17 et 18, peut être agencé dans la zone de séparation primaire. L'organe de déviation supérieur 40 est configuré pour imposer à la phase gazeuse séparée un chemin indirect, préférentiellement en chicane. L'organe de déviation supérieur 40 peut, en outre, être configuré de manière à autoriser également la retombée, dans la chambre de séparation 26, des potentielles fines gouttelettes de phases liquides qui auraient été entraînées dans la partie supérieure 27 du conduit d'échappement 20 mais qui se seraient condensées sur les parois dudit conduit d'échappement avant d'atteindre l'installation de surface 14.

Selon un mode de réalisation de l'invention particulièrement avantageux illustré sur les Figures 13 et 15, et particulièrement adapté aux configurations hybride montante en chaînette (HCR) ou hybride montante tendue (FSHR), un organe de déviation hélicoïdale 41 se présentant sous la forme d'une lame agencée en hélice autour du conduit d'injection 34, s'étend à l'intérieur de la zone de séparation secondaire 33 de la chambre de séparation 26. En pratique, en retombant, la ou les phases liquides vont s'écouler sur la face supérieure de la lame. Dans le même temps, le reste de la phase gazeuse encore mélangé à la ou aux phases liquides dans le mélange multiphasique premièrement séparé, en se séparant de ladite ou desdites phases liquides, tend à remonter jusqu'à entrer en contact avec la face inférieure de la lame. Ainsi, se créer une lame de gaz sous la face inférieure de la lame créant un chemin de passage préférentiel pour la remonter de la phase gazeuse séparée vers la zone de séparation primaire 31 tout en minimisant le risque de réentrainement de ladite phase gazeuse séparée par la ou les phases liquides descendant vers le fond de la zone de séparation secondaire 33. L'organe de déviation hélicoïdal 41, est configuré pour :
- limiter la hauteur de chute de la ou des phases liquides projetées par l'extrémité libre 38 du conduit d'injection 34 et donc de limiter le risque de moussage ;
- maximiser la surface libre de la ou des phases liquides s'écoulant le long de la lame agencée en hélice, la séparation gaz/liquide s'opérant au niveau de la dite surface libre, l'efficacité de ladite séparation gaz/liquide augmentant avec les dimensions de ladite surface libre ;
- amplifier la séparation gaz/liquide par centrifugation du mélange multiphasique d'hydrocarbures premièrement séparé ;
- lorsque la lame s'étend sur toute la largeur de l'espace annulaire 35, remplacer les cales de centrage 29 qui tendent à obstruer l'écoulement de la ou des phases liquides au sein de la zone de séparation secondaire 33, diminuant ainsi les performances de la séparation gaz/liquide et augmentant sensiblement le risque de moussage.

La lame peut être agencée orthogonalement, ou de manière inclinée, par rapport à la surface extérieure du conduit d'injection 34, et préférentiellement inclinée de sorte que la périphérie de la lame soit positionné au-dessus de la partie intérieure. La lame peut s'étendre sur toute la largeur de l'espace annulaire 35 ou sur seulement une partie. Le pas de l'organe de déviation hélicoïdal 41 peut être continu ou variable et par exemple diminuer au fur et à mesure que l'on se dirige vers l'extrémité inférieure 30 de la conduite d'échappement 20. Le pas d'hélice a une dimension configurée pour permettre la formation de la lame de gaz et donc permettre la remonté de la phase gazeuse séparée à contre-courant de la ou des phases liquides. Préférentiellement, l'organe de déviation hélicoïdal 41 pourra avoir un pas d'hélice d'au moins 1 m. L'organe de déviation hélicoïdal 41 peut comporter plusieurs lames en hélice agencées en parallèle ou encore comporter plusieurs lames agencées en série et formant ainsi plusieurs tronçons d'hélices.

Selon un mode de réalisation particulier de l'invention, non représenté, un ou plusieurs séparateurs en ligne peuvent être installés au niveau de la conduite de récupération 22, le plus généralement en amont de la ou les pompes de relevage 24, afin de séparer la phase gazeuse résiduelle du mélange multiphasique d'hydrocarbures deuxièmement séparé. Le séparateur en ligne se présente sous la forme d'un corps cylindre agencé dans l'axe de la conduite de récupération 22. Le séparateur en ligne comporte un moyen pour imposer un mouvement rotatif au mélange multiphasique d'hydrocarbures deuxièmement séparé. Par effet centrifuge, la ou les phases liquides plus denses que la phase gazeuse vont se plaquer sur les parois du corps cylindrique, tandis que la phase gazeuse moins dense va être expulsée de la ou des phases liquides pour se retrouver dans une zone centrale dudit corps cylindrique. Le séparateur en ligne comprend alors un conduit d'extraction de la phase gazeuse dont une première partie s'étend coaxialement au corps cylindrique de manière à ce que la phase gazeuse de la zone centrale dudit corps cylindrique pénètre à l'intérieur dudit conduit. Le diamètre du conduit d'extraction généralement inférieur à la moitié du diamètre du corps cylindrique, est préférentiellement dimensionné de manière à extraire en sus de la phase gazeuse située dans la zone centrale dudit corps cylindrique, une fine couche de phase liquide de manière à s'assurer que la phase liquide sortant du séparateur en ligne est au maximum épurée de la phase gazeuse. Le conduit d'extraction comporte alors une deuxième partie s'étendant orthogonalement à la périphérie du corps cylindrique et traversant ledit corps cylindrique. Les première et deuxième parties du conduit d'extraction sont reliées l'une à l'autre par l'intermédiaire d'un coude. La ou les phases liquides, quant-à-elles s'écoulent autour du conduit d'extractions vers la conduite de récupération 22. La deuxième partie du conduit d'extraction est alors raccordée à la conduite d'échappement 20 pour y réinjecter la phase gazeuse nouvellement séparée, ou encore directement à l'installation de surface 14. Dans ce mode de réalisation particulier comportant un séparateur en ligne, il est possible de minimiser les dimensions de la conduite d'échappement 20, et notamment de la chambre de séparation 26, sans dégrader la séparation gaz/liquide globale. En effet, la minimisation les dimensions de la conduite d'échappement 20 tend à dégrader la première et la deuxième séparation gaz/liquide qui s'effectuent au niveau des zones de séparation primaire 31 et secondaire 33. L'adjonction d'un séparateur en ligne permet alors par une troisième séparation gaz/liquide de compenser la dégradation de la première et deuxième séparations gaz/liquide. L'utilisation d'un séparateur en ligne agencé en aval de l'extrémité inférieure 30 de la chambre de séparation 26 est particulièrement avantageuse dans la mesure où la hauteur de la colonne de phases liquides dans la zone de séparation secondaire de ladite chambre de séparation génère :
- une pression suffisante au niveau dudit séparateur en ligne pour permettre un écoulement naturel du mélange multiphasique d'hydrocarbures à l'intérieur du séparateur en ligne.
- une pression de fonctionnement au niveau dudit séparateur en ligne supérieure à la pression de fonctionnement au niveau de la zone de séparation primaire de la chambre de séparation 26 pour permettre de réinjecter la phase gazeuse provenant de la troisième séparation gaz/liquide à l'intérieur de la conduite d'échappement 20, et ainsi éviter le risque que la phase gazeuse provenant de la première et deuxième séparation gaz/liquide ne s'échappe par le conduit d'extraction et se dirige vers le séparateur en ligne. Dans une telle configuration, la chambre de séparation 26 permet notamment l'absorption des éventuels bouchons de phases liquides pendant les régimes par à-coup et génère en entrée du séparateur en ligne un régime continu dépourvu d'à-coup, le régime par à-coup étant incompatible avec le bon fonctionnement dudit séparateur en ligne.

Selon un mode de réalisation avantageux, la conduite d'échappement 20, la conduite de récupération 22 ainsi que tout autre équipement de l'invention, peuvent être équipés, en partie ou en totalité, de moyen de chauffage actif, direct ou indirect. Ce moyen de chauffage actif peut comprendre des câbles électriques chauffants agencés autour de la conduite d'échappement 20, et/ou de la conduite de récupération 22 et/ou de tout autre équipement, et configurés pour chauffer la ou les phases liquides et gazeuse à l'intérieur desdites conduites ou desdits équipements. Selon une variante de réalisation, le moyen de chauffage actif peut comprendre un dispositif d'induction d'un courant dans le corps métallique de la conduite d'échappement 20, et/ou de la conduite de récupération 22 et/ou de tout autre équipement de manière à créer au niveau de ladite conduite ou dudit équipement un dégagement de chaleur par effet joule et ainsi chauffer la ou les phases liquides et gazeuse à l'intérieur desdites conduites ou desdits équipements. Le moyen de chauffage actif peut également comprendre des moyens de mesure de la température des phases liquides et gazeuses. Ces moyens de mesure peuvent, par exemple, se présenter sous la forme de fibres optiques agencées autour de la conduite d'échappement 20, et/ou de la conduite de récupération 22 et/ou de tout autre équipement. Une unité de commande de la température peut alors être configurée pour réguler la température des phases liquides et gazeuse à une valeur désirée. Le maintien des phases liquides et gazeuse à une température désirée permet d'éviter la formation d'hydrates solides, de glace, de cire, ou autres, notamment pendant les phases d'arrêt de production.

Avantageusement et comme schématisé sur les Figures 13 et 14, la chambre de séparation 26 est équipée d'un ou plusieurs organes de déviation primaire 44, et montés dans la zone de séparation primaire. Selon un mode de mise en oeuvre particulier, les organes de déviation primaire 44 sont mobiles. Ils sont par exemple constitués d'hélices présentant des pales de formes diverses, incurvées ou bien torsadées. Selon un autre mode de mise en oeuvre, les organes de déviation primaire 44 sont montés en position fixe à l'intérieur de la chambre de séparation 26 dans le prolongement de l'extrémité libre 38 du conduit d'injection 34. De tels organes de déviation primaire 44 permettent de favoriser la séparation gaz/liquide.

Les Figures 8 et 9 illustrent respectivement les sections droites de la chambre de séparation 26 représentée sur la Figure 7, l'une au niveau de la zone de séparation secondaire 33, l'autre au niveau de la zone de séparation primaire 31.

On retrouve ainsi, pour les Figures 8 et 9, le conduit d'injection 34 installé coaxialement à l'intérieur de la chambre de séparation 26. On choisira, par exemple, un conduit d'injection 34 d'un diamètre voisin de la moitié de celui de la chambre de séparation 26 au niveau de la zone intermédiaire 32, et plus précisément, au niveau de la zone de séparation secondaire 33. Partant, le diamètre de l'extrémité inférieure 30 de la chambre de séparation 26 est généralement calculé de manière à ce que la surface de la section droite qu'il définit soit inférieure ou égale à la différence des surfaces des sections droites de la chambre de séparation 26 au niveau de la zone intermédiaire 32, et du conduit d'injection 34, et plus précisément au niveau de la zone de séparation secondaire 33.

Ainsi, le mélange multiphasique d'hydrocarbures est injecté verticalement vers l'extrémité supérieure 28 de la chambre de séparation 26 à travers l'ouverture axiale 39, à l'extrémité libre 38 du conduit d'injection 34. En outre, la ou les pompes de relevage 24 sont mises en fonctionnement. Aussi, au niveau de l'extrémité libre 38, la phase gazeuse et la ou les phases liquides tendent à se séparer, et grâce à l'effet de la gravité, la ou les phases liquides s'écoulent dans l'espace annulaire 35, vers le fond marin 10, puis rejoignent l'extrémité inférieure 30 pour être propulsées par la ou les pompes de relevage 24 à l'intérieur de la conduite de récupération 22, tandis qu'à l'inverse, la phase gazeuse tend à s'échapper, à l'opposé du fond marin, à travers l'extrémité supérieure 28 puis de la conduite d'échappement 20 qui la prolonge.

Aussi, grâce à la ou les pompes de relevage 24, il est aisé d'ajuster l'interface gaz/liquide réelle 42 illustrée sur la Figure 7, entre la phase gazeuse et la ou les phases liquides à l'intérieur de la chambre de séparation 26. La position verticale de cette interface gaz/liquide réelle 42 vis-à-vis de l'extrémité libre 38 est en effet déterminante pour optimiser la séparation gaz/liquide. En outre, des capteurs reliés aux câbles électriques et/ou optiques sont mis en oeuvre afin de pouvoir asservir la ou les pompes de relevage 24. Ces capteurs permettent de déterminer, soit le niveau réel de l'interface gaz/liquide 42, soit la pression au niveau de la ou les pompes de relevage 24, laquelle témoigne de la hauteur de la colonne de phases liquides.

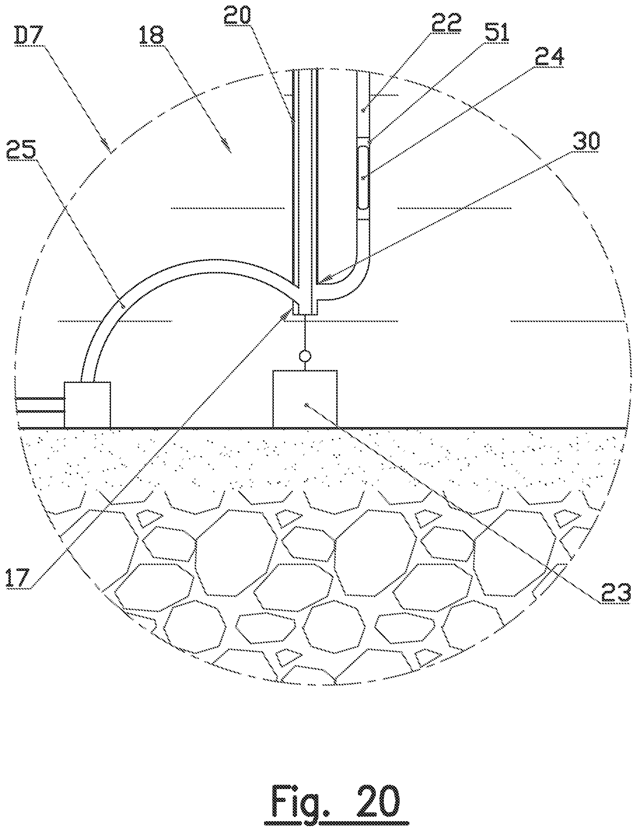

A titre d'exemple, la chambre de séparation 26 est ménagée à l'intérieur d'une conduite flexible, ou d'un assemblage de conduite hybride, flexible et rigide, présentant par exemple un diamètre de douze pouces, et est installée de manière classique en caténaire. Quant au conduit d'injection 34, préférentiellement rigide mais potentiellement flexible, il présente par exemple un diamètre de six pouces. Un tel agencement peut être réalisé en surface au niveau d'un bateau de pose, et l'ensemble peut alors être mis en oeuvre de manière classique à travers le puits central dudit bateau de pose. Il en est de même pour le conduit d'alimentation sous-marin 16, la conduite de récupération 22 et la conduite d'échappement 20. En revanche, préférentiellement, la ou les pompes de relevage 24 sont maintenues en position fixe sur le fond marin 10 par l'intermédiaire d'une pile d'ancrage. Dans une variante de réalisation représentée sur les figures 19 et 20, la pompe de relevage 24 peut se présenter sous la forme d'une pompe verticale. On entend par pompe verticale une pompe qui transfère un fluide d'un orifice d'aspiration situé sur la partie inférieure de la dite pompe vers un orifice situé sur la partie supérieure de ladite pompe. Les pompes verticales sont généralement utilisées à l'intérieur d'un puit. En particulier la pompe verticale peut être du type pompe électrique submersible, dite ESP pour « Electric Submersible Pompe » en langue anglaise, agencée verticalement à l'intérieure de la conduite de récupération 22. La conduite de récupération 22 peut en particulier comprendre un tronçon de conduite 51 déconnectable du reste de ladite conduite de récupération, et à l'intérieur duquel est agencée la pompe verticale de manière à pouvoir retirer ladite pompe verticale pour en effectuer la maintenance. Le tronçon de conduite 51 est assemblé au reste de la conduite de récupération via un assemblage par bride, via un assemblage par connecteur rapide du type UCON®, ou via toute autre moyen d'assemblage convenant à l'homme du métier. En particulier, lorsque l'installation sous-marine 18 de séparation gaz/liquide comporte plusieurs conduites de récupération 22, ces dernières peuvent comporter des vannes d'isolement de manière à interrompre le fonctionnement d'une ou plusieurs desdites conduites de récupération 22 pour effectuer la maintenance de la pompe de relevage 24 qui y est associée, pendant que le fonctionnement des autres conduites de récupération 22 est maintenue. Dans une variante de réalisation non représentée, la pompe verticale peut être agencée dans le prolongement de la partie inférieure de la conduite de récupération 22, ladite pompe verticale étant directement assemblée à ladite conduite de récupération et à la conduite d'échappement 20 via un assemblage par bride, via un assemblage par connecteur rapide du type UCON®, ou via toute autre moyen d'assemblage convenant à l'homme du métier.

Telle que représentée sur la Figure 2, la chambre de séparation 26 est maintenue suspendue au-dessus du fond marin 10. Selon un autre mode de réalisation, l'ensemble conduite d'échappement 20 et conduite de récupération 22 peut être suspendu.

Selon un autre mode de mise en oeuvre, représenté sur la Figure 4, la partie basse de la chambre de séparation 26 est posée sur le fond marin 10. Aussi, en mer profonde, la température est voisine de 4 °C et partant, des câbles chauffants peuvent être mis en oeuvre afin de réduire les possibilités de formation des bouchons de paraffine, de glace ou bien d'hydrates.

On retrouve sur les Figures 1 à 4 et 19, la chambre de séparation 26 verticale présentant une extrémité supérieure 28 prolongée par la partie supérieure 27 de la conduite d'échappement 20 et opposée à une extrémité inférieure 30, laquelle est reliée à une conduite de récupération 22 par l'intermédiaire d'au moins une pompe de relevage 24 posée sur le fond marin 10. À l'intérieur de la chambre de séparation 26, vient s'étendre un conduit d'injection 34, lequel prolonge un conduit d'alimentation sous-marin 16 rejoignant la chambre de séparation 26. Selon un mode de mise en oeuvre de l'invention, particulièrement avantageux, le diamètre du conduit d'injection 34 est inférieur à celui du conduit d'alimentation sous-marin 16 de manière à pouvoir augmenter la vitesse d'écoulement du mélange multiphasique d'hydrocarbures à travers le conduit d'injection 34.

Conformément à l'invention, la surface de la section de l'extrémité inférieure 30 de la chambre de séparation 26 est sensiblement inférieure ou égale à la différence des surfaces des sections de la zone intermédiaire 32 et du conduit d'injection 34.

La chambre de séparation 26 est ménagée dans une conduite tubulaire dont le diamètre est faible comparativement à la longueur de manière à pouvoir installer l'ensemble depuis un bateau de pose classique.

## Revendications

1. Installation sous-marine de séparation gaz/liquide d'un mélange multiphasique d'hydrocarbures, ledit mélange multiphasique d'hydrocarbures comprenant une phase gazeuse et au moins une phase liquide, ladite installation (18) comprenant, d'une part un conduit d'alimentation sous-marin (16) dudit mélange multiphasique d'hydrocarbures, et d'autre part, une chambre de séparation longitudinale (26) destinée à être installée sensiblement verticalement, ladite chambre de séparation (26) présentant, d'une part une extrémité inférieure (30) et une extrémité supérieure opposée (28), et d'autre part une zone intermédiaire (32) de séparation située entre les deux extrémités opposées (28, 30), ladite chambre de séparation (26) comprenant en outre un conduit d'injection (34) raccordé audit conduit d'alimentation (16) et s'étendant longitudinalement à l'intérieur de ladite zone intermédiaire (32), ledit conduit d'injection présentant une paroi tubulaire et une extrémité libre (38) présentant une ouverture axiale (39) débouchant à l'intérieur de ladite chambre de séparation (26), de manière à autoriser ladite au moins une phase gazeuse à s'échapper vers ladite extrémité supérieure (28) de ladite chambre de séparation (26), tandis que ladite au moins une phase liquide s'évacue vers ladite extrémité inférieure (30) ;
**caractérisée en ce que** ladite paroi tubulaire est continue de manière à être étanche vis-à-vis dudit mélange multiphasique d'hydrocarbures.

2. Installation sous-marine selon la revendication 1, **caractérisée en ce qu'**elle comprend une conduite d'échappement (22) de ladite au moins une phase gazeuse s'étendant dans le prolongement de ladite extrémité supérieure (28).

3. Installation sous-marine selon la revendication 1 ou 2, **caractérisée en ce qu'**elle comprend une conduite de récupération (20) de ladite au moins une phase liquide s'étendant dans le prolongement de ladite extrémité inférieure (30).

4. Installation sous-marine selon l'une quelconque des revendications 1 à 3, **caractérisée en ce que** ladite chambre de séparation (26) est destinée à être suspendue dans un milieu marin.

5. Installation sous-marine selon l'une quelconque des revendications 1 à 4, **caractérisée en ce qu'**elle comprend en outre une pompe de relevage (24) de ladite au moins une phase liquide raccordée à ladite extrémité inférieure (30).

6. Installation sous-marine selon la revendication 5, **caractérisée en ce que** la pompe de relevage (24) est une pompe verticale agencée dans le prolongement de la partie inférieure de la conduite de récupération (22).

7. Installation sous-marine selon l'une quelconque des revendications 1 à 6, **caractérisée en ce que** ledit conduit d'injection (34) et ladite zone intermédiaire (32) sont sensiblement concentriques.

8. Installation sous-marine selon l'une quelconque des revendications 1 à 7, **caractérisée en ce que** le rapport desdites sections de ladite zone intermédiaire (32) et dudit conduit d'injection (34) est compris entre 1,5 et 20.

9. Installation sous-marine selon l'une quelconque des revendications 1 à 8, **caractérisée en ce que** ladite chambre de séparation (26) comprend des organes de déviation dudit mélange multiphasique d'hydrocarbures pour favoriser la séparation desdites phases gazeuses et liquides.

10. Installation sous-marine selon la revendication 9, **caractérisée en ce que** lesdits organes de déviation sont montés mobiles en rotation.

11. Installation sous-marine selon la revendication 9, **caractérisée en ce que** lesdits organes de déviation comprennent une lame (41) agencée en hélice autour dudit conduit d'injection (34).

12. Installation sous-marine selon l'une quelconque des revendications 1 à 11, **caractérisée en ce que** ladite chambre de séparation (26) présente une longueur de chambre et un diamètre de chambre, et **en ce que** ladite longueur de chambre est supérieure à cent fois ledit diamètre de chambre.

13. Installation sous-marine selon l'une quelconque des revendications 1 à 12, la conduite d'échappement (20) et la conduite de récupération (22) se rejoignent au sein d'une conduite à double parois, la conduite de récupération (22) s'étendant annulairement autour de la conduite d'échappement (20) ou inversement.

14. Installation sous-marine selon l'une quelconque des revendications 1 à 12, la conduite d'échappement (20) et la conduite de récupération (22) se rejoignent au sein d'un premier ombilical (49) à plusieurs lignes fluides, ladite conduite d'échappement étant reliée à un premier jeu d'une ou plusieurs lignes fluides dudit premier ombilical et ladite conduite de récupération étant reliée à un deuxième jeu d'une ou plusieurs lignes fluides dudit premier ombilical distinctes des lignes fluides dudit premier jeu.

## Patentansprüche

1. Unterwasser-Anlage zur Abscheidung von Gas/Flüssigkeit aus einem mehrphasigen Kohlenwasserstoffgemisch, wobei das mehrphasige Kohlenwasserstoffgemisch eine gasförmige Phase und eine flüssige Phase enthält, wobei die Anlage (18) einerseits eine Unterwasser-Zuleitung (16) für das mehrphasige Kohlenwasserstoffgemisch und andererseits eine längsgerichtete Abscheidungskammer (26), die dazu bestimmt ist, im Wesentlichen vertikal installiert zu werden, umfasst, wobei die Abscheidungskammer (26) einerseits ein unteres Ende (30) und ein gegenüberliegendes oberes Ende (28) und andererseits eine Abscheidungs-Zwischenzone (32), die zwischen den zwei gegenüberliegenden Enden (28, 30) befindlich ist, aufweist, wobei die Abscheidungskammer (26) ferner eine Einspritzleitung (34) umfasst, die an die Zuleitung (16) angeschlossen ist und sich in Längsrichtung im Inneren der Zwischenzone (32) erstreckt, wobei die Einspritzleitung eine rohrförmige Wandung und ein freies Ende (38) mit einer axialen Öffnung (39) aufweist, die im Inneren der Abscheidungskammer (26) mündet, derart, dass sie der mindestens einen gasförmigen Phase gestattet, zu dem oberen Ende (28) der Abscheidungskammer (26) hin zu entweichen, während die mindestens eine flüssige Phase zu dem unteren Ende (30) hin abgeleitet wird;
**dadurch gekennzeichnet, dass** die rohrförmige Wandung durchgängig ist, derart, dass sie gegenüber dem mehrphasigen Kohlenwasserstoffgemisch abgedichtet ist.

2. Unterwasser-Anlage nach Anspruch 1, **dadurch gekennzeichnet, dass** sie eine Ableitung (22) für die mindestens eine gasförmige Phase umfasst, die sich in der Verlängerung des oberen Endes (28) erstreckt.

3. Unterwasser-Anlage nach Anspruch 1 oder 2, **dadurch gekennzeichnet, dass** sie eine Auffangleitung (20) für die mindestens eine flüssige Phase umfasst, die sich in der Verlängerung des unteren Endes (30) erstreckt.

4. Unterwasser-Anlage nach einem der Ansprüche 1 bis 3, **dadurch gekennzeichnet, dass** die Abscheidungskammer (26) dazu bestimmt ist, in einer Meeresumgebung aufgehängt zu werden.

5. Unterwasser-Anlage nach einem der Ansprüche 1 bis 4, **dadurch gekennzeichnet, dass** sie ferner eine Hebepumpe (24) für die mindestens eine flüssige Phase umfasst, die mit dem unteren Ende (30) verbunden ist.

6. Unterwasser-Anlage nach Anspruch 5, **dadurch gekennzeichnet, dass** die Hebepumpe (24) eine vertikale Pumpe ist, die in der Verlängerung des unteren Teils der Auffangleitung (**22**) angeordnet ist.

7. Unterwasser-Anlage nach einem der Ansprüche 1 bis 6, **dadurch gekennzeichnet, dass** die Einspritzleitung (34) und die Zwischenzone (32) im Wesentlichen konzentrisch sind.

8. Unterwasser-Anlage nach einem der Ansprüche 1 bis 7, **dadurch gekennzeichnet, dass** das Verhältnis der Querschnitte der Zwischenzone (32) und der Einspritzleitung (34) zwischen 1,5 und 20 beträgt.

9. Unterwasser-Anlage nach einem der Ansprüche 1 bis 8, **dadurch gekennzeichnet, dass** die Abscheidungskammer (26) Ablenkungsorgane für das mehrphasige Kohlenwasserstoffgemisch umfasst, um die Abscheidung der gasförmigen und der flüssigen Phase zu begünstigen.

10. Unterwasser-Anlage nach Anspruch 9, **dadurch gekennzeichnet, dass** die Ablenkungsorgane drehbeweglich gelagert sind.

11. Unterwasser-Anlage nach Anspruch 9, **dadurch gekennzeichnet, dass** die Ablenkungsorgane ein Blatt (41) umfassen, das spiralförmig um die Einspritzleitung (34) herum angeordnet ist.

12. Unterwasser-Anlage nach einem der Ansprüche 1 bis 11, **dadurch gekennzeichnet, dass** die Abscheidungskammer (26) eine Kammerlänge und einen Kammerdurchmesser aufweist und dass die Kammerlänge mehr als das Hundertfache des Kammerdurchmessers beträgt.

13. Unterwasser-Anlage nach einem der Ansprüche 1 bis 12, die Ableitung (20) und die Auffangleitung (22) in einer doppelwandigen Leitung zusammentreffen, wobei die Auffangleitung (22) sich ringförmig um die Ableitung (20) oder umgekehrt erstreckt.

14. Unterwasser-Anlage nach einem der Ansprüche 1 bis 12, die Ableitung (20) und die Auffangleitung (22) in einer ersten Verbindungsleitung (49) mit mehreren Fluidleitungen zusammentreffen, wobei die Ableitung mit einem ersten Satz einer oder mehrerer Fluidleitungen der ersten Verbindungsleitung verbunden ist und die Auffangleitung mit einem zweiten Satz einer oder mehrerer Fluidleitungen der ersten Verbindungsleitung verbunden ist, die von den Fluidleitungen des ersten Satzes verschieden sind.

## Claims

1. An underwater facility for gas/liquid separation of a multiphase hydrocarbon mixture, said multiphase hydrocarbon mixture comprising a gas phase and at least one liquid phase, said facility (18) comprising, on the one hand, an underwater supply line (16) of said multiphase hydrocarbon mixture, and on the other hand, a longitudinal separating chamber (26) intended to be installed approximately vertically, said separating chamber (26) having, on the one hand, a lower end (30) and an opposite upper end (28), and on the other hand an intermediate separating zone (32) located between the two opposite ends (28, 30), said separating chamber (26) further comprising an injection line (34) connected to said supply line (16) and extending longitudinally inside said intermediate zone (32), said injection line having a tubular wall and a free end (38) having an axial opening (39) opening inside said separating chamber (26), in such a way as to allow said at least one gas phase to escape to said upper end (28) of said separating chamber (26), whereas said at least one liquid phase goes to said lower end (30);
**characterized in that** said tubular wall is continuous so as to be impervious to said multiphase hydrocarbon mixture.

2. The underwater facility as claimed in claim 1, **characterized in that** it comprises an exhaust pipe (22) of said at least one gas phase extending in the prolongation of said upper end (28).

3. The underwater facility as claimed in claim 1 or 2, **characterized in that** it comprises a recovery pipe (20) of said at least one liquid phase extending in the prolongation of said lower end (30).

4. The underwater facility as claimed in any one of claims 1 to 3, **characterized in that** said separating chamber (26) is intended to be suspended in a marine environment.

5. The underwater facility as claimed in any one of claims 1 to 4, **characterized in that** it further comprises a lifting pump (24) of said at least one liquid phase connected to said lower end (30).

6. The underwater facility as claimed in claim 5, **characterized in that** the lifting pump (24) is a vertical pump provided in the prolongation of the lower part of the recovery pipe (22).

7. The underwater facility as claimed in any one of claims 1 to 6, **characterized in that** said injection line (34) and said intermediate zone (32) are approximately concentric.

8. The underwater facility as claimed in any one of claims 1 to 7, **characterized in that** the ratio of said cross sections of said intermediate zone (32) and of said injection line (34) is between 1.5 and 20.

9. The underwater facility as claimed in any one of claims 1 to 8, **characterized in that** said separating chamber (26) comprises devices for diverting said multiphase hydrocarbon mixture to promote separation of said gaseous and liquid phases.

10. The underwater facility as claimed in claim 9, **characterized in that** said diverting devices are mounted rotatably.

11. The underwater facility as claimed in claim 9, **characterized in that** said diverting devices comprise a plate (41) arranged in a helix around said injection line (34).

12. The underwater facility as claimed in any one of claims 1 to 11, **characterized in that** said separating chamber (26) has a chamber length and a chamber diameter, and **in that** said chamber length is a hundred times greater than said chamber diameter.

13. The underwater facility as claimed in any one of claims 1 to 12, the exhaust pipe (20) and the recovery pipe (22) meet inside a double-walled pipe, the recovery pipe (22) extending annularly around the exhaust pipe (20) or vice versa.

14. The underwater facility as claimed in any one of claims 1 to 12, the exhaust pipe (20) and the recovery pipe (22) meet in a first umbilical (49) with several fluid lines, said exhaust pipe being connected to a first set of one or more fluid lines of said first umbilical and said recovery pipe being connected to a second set of one or more fluid lines of said first umbilical different from the fluid lines of said first set.
